# FASCICULE DE BREVET EUROPEEN

(11) **EP 2 227 324 B1**
(45) Date de publication et mention de la délivrance du brevet: **29.06.2011**
(21) Numéro de dépôt: 08878657.9
(22) Date de dépôt: 14.11.2008
(51) Int. Cl.: B01J 19/12, B01J 19/08, B01J 19/10, B01J 8/00, B01J 8/44, B01J 19/18, B01J 19/20, C10J 3/02, C10J 3/20, F24J 2/00, C10J 3/54

(54) **PROCEDE UTILISANT L'ENERGIE THERMIQUE SOLAIRE COUPLEE A DES PLASMAS POUR PRODUIRE UN CARBURANT LIQUIDE ET DU DIHYDROGENE A PARTIR DE BIOMASSE OU DE CHARBON FOSSILE (PROCEDE P-SL ET P-SH)**
VERFAHREN UNTER VERWENDUNG VON SONNENENERGIE, MIKROWELLEN UND PLASMATA ZUR HERSTELLUNG EINES FLÜSSIGBRENNSTOFFS UND ZUR GEWINNUNG VON WASSERSTOFF AUS EINER BIOMASSE ODER AUS FOSSILER KOHLE
METHOD USING SOLAR ENERGY, MICROWAVES AND PLASMAS FOR PRODUCING A LIQUID FUEL AND HYDROGEN FROM A BIOMASS OR FOSSIL COAL

(30) Priorité: 16.11.2007 FR 0708031; 25.01.2008 FR 0800384
(43) Date de publication de la demande: 15.09.2010
(73) Titulaire: Ugolin, Nicolas, 75002 Paris (FR)
(72) Inventeur: Ugolin, Nicolas, 75002 Paris (FR)
(74) Mandataire: Desaix, Anne
(86) Numéro de dépôt international: PCT/FR2008/001606
(87) Numéro de publication internationale: WO 2009/098375

(56) Documents cités:
- WO-A-2004/041974
- WO-A-2006/048224
- WO-A-2008/027980
- US-A- 4 177 120
- US-A- 4 229 184
- US-A- 4 488 935
- US-A- 5 647 877
- US-A- 6 113 865

## Description

L'épuisement des ressources pétrolières et la pollution en dioxyde de carbone (CO2) que génère la combustion de produits pétroliers (une des principales causes du réchauffement climatique), impliquent le développement de procédés de production d'énergies alternatives moins polluantes, permettant de conserver le confort de vie des pays industrialisés et de faire face à la demande en énergie toujours croissantes des pays émergents. En effet, la consommation énergétique mondiale était de 5500 Mtep en 1971, de 10300Mtep en 2002, et est évaluée à 16500Mtep pour 2030.

Il faut toutefois distinguer :
- D'une part, les besoins énergétiques destinés au développement industriel et urbain, que nous pouvons qualifier de statiques (pour lesquelles de nombreuses solutions voient le jour. Essentiellement des unités de production d'électricité solaire, nucléaire, hydraulique, géothermique, éolienne ...).
- D'autre part, les besoins énergétiques liés aux transports qui nécessitent le stockage et le transport de l'énergie par le véhicule lui-même, exception faite des véhicules électriques en ligne comme les trains et les tramways ...

Pour ce deuxième besoin lié au transport, les solutions semblent bien moins évidentes, car le ou les carburants utilisés dans les différents modes de transport doivent répondre à plusieurs contraintes.

Ils doivent être facilement transportables et stockables dans des conditions de sûreté au moins équivalentes à ce qui existe actuellement pour les produits pétroliers, avoir une balance de pollutions ( fabrication - utilisation inférieure à celle des hydrocarbures ) et enfin être économiquement viables par rapport aux produits pétroliers. Le problème se complique encore plus en prenant en compte les contraintes d'un carburant compatible avec les transports aériens.

Différentes voies se dessinent pour la production de carburant pour les véhicules :
- La production de biocarburant (alcool, ester), .
- L'utilisation du dihydrogène comme carburant dans des piles à combustible, ou des moteurs thermiques,
- L'utilisation de batteries très performantes dans des véhicules électriques,
- L'utilisation de la biomasse ou de charbon pour la production de carburant.

La production de biocarburant, alcool ou ester d'acides gras, semble de prime abord prometteuse et est déjà mise en place dans différents pays. Toutefois, ces solutions ne sont pas parfaites, en effet les surfaces à cultiver pour offrir une autonomie énergétique sont colossales, représentant plus que l'ensemble des surfaces cultivées actuellement. De ce fait, ces cultures entrent en concurrence avec les cultures alimentaires. Les matières premières pour la production de ces biocarburants sont souvent des produits alimentaires comme le maïs, le blé, etc. Une exploitation intense de biocarburants de ce type, en plus de déséquilibrer l'économie agroalimentaire mondiale, particulièrement celle des pays émergents et en voie de développement, serait un vecteur fort de risque de famine et de désordres écologiques importants.

De plus, certains modes de production de ces biocarburants ont un rendement énergétique très faible et une balance de pollution élevée au regard du pétrole. Pour exemple, nous pouvons citer la production d'éthanol à partir de la betterave, ou la production d'acides gras ou d'ester à partir du colza.

L'utilisation du dihydrogène comme carburant semble une solution élégante pour un carburant propre à l'utilisation. Toutefois le problème de production du dihydrogène non polluant pour un coût de revient équivalent aux produits pétroliers n'est pas encore résolu. De plus, l'utilisation de ce carburant nécessite de lever de nombreux verrous pour son stockage et sa distribution au regard de sa dangerosité.

Le stockage de l'énergie électrique dans des batteries qui seront utilisées dans des véhicules électriques ou mixte électrique - thermique est l'une des solutions proposée par de nombreux constructeurs automobiles. Cette solution implique la production de batteries très performantes à faible coût ne générant pas ou peu de pollution, que ce soit pour leur fabrication ou pour leur recyclage. De plus, le problème de la production d'un carburant alternatif subsiste pour les véhicules à propulsion mixte électrique - thermique.

À notre connaissance, aucune solution viable de propulsion aéronautique basée sur les piles à combustible ou les batteries électriques n'a été proposée à ce jour.

L'utilisation de la biomasse et notamment des déchets végétaux, de cellulose, ou de produits agricoles non valorisés, représente une ressource importante de matières premières pour la fabrication de carburants liquides, de même que pour les matières plastiques non recyclables en fin de vie.

Les réserves de charbon fossile peuvent permettre de satisfaire les besoins en carburant liquide pour plusieurs décennies encore.

Toutefois, que ce soit pour la biomasse ou le charbon fossile, les procédés de gazéification utilisés pour la fabrication de carburant liquide à partir de ces matières premières sont encore trop polluants en CO2, qui peut représenter de 20 à 40% des gaz produits.

En raison de cette perte de carbone sous forme de CO2, la production de carburant à partir de la biomasse par gazéification ne présente une balance de pollution que légèrement favorable par rapport au pétrole, qui devient vite défavorable si les difficultés à contrôler les émissions de CO2 lors de la production des biomasses et de leur transport aux usines de transformation ne sont pas maîtrisées. En minimisant les pertes de carbone sous forme de CO2 lors de la production de carburant à partir de biomasse, cette balance pourrait être conduite à l'équilibre ou proche celui-ci, si l'on parvient à séquestrer le CO2 produit ou à le transformer en carburant avec un meilleur rendement. En effet, dans ces conditions, les biomasses fixeraient une proportion de carbone équivalente à celle dégagée lors de la combustion du carburant synthétisé.

Pour le charbon fossile, la situation est toute autre. Quel que soit le mode de transformation du charbon en carburant, la combustion du carburant rejettera dans l'atmosphère du CO2 provenant de carbone fossile, en plus des sous-produits indésirables (souffre, sulfure ...) . Un procédé de gazéification sans rejet de CO2 améliorera la balance de pollution des carburants obtenus par rapport aux produits pétroliers. Toutefois pour rendre la balance de pollution des carburants d'origine fossile équivalente à la balance des carburants provenant de la biomasse, des solutions de séquestration ou de transformation du CO2 devront être mises en place au niveau des sites d'utilisation des biocarburants, c'est-à-dire des véhicules eux-mêmes.

De plus en plus de méthodes permettent la transformation du CO2 en produit valorisable sont développées, toutefois très peu d'entre elles décrivent des solutions adaptées à l'industrie de gazéification de biomasse ou du charbon.

Deux grands types de procédés de transformation du CO2 peuvent êtres cités :
- Les méthodes catalytiques consistant à réduire le CO2 dans des composés comme le méthanol, le formaldéhyde ou l'acide formique directement valorisable.
- Les procédés électrochimiques en phase gazeuse consistant à réduire le CO2 en (monoxyde de carbone) CO et en ( dihydrogène ) H2 sous l'action de décharges électriques.

A noter qu'il existe des méthodes électrochimiques en solution permettant de transformer le CO2 en acide formique.

Bien que valorisables industriellement, le méthanol, le méthanal, l'acide formique, ne permettent que très difficilement la synthèse d'hydrocarbures par des procédés comme le procédé Fischer-Tropsch (FT).

Les procédés électrochimiques en phase gazeuse, peuvent produire du CO et du H2 à partir de CO2 gaz. Les méthodes d'arc glissant (GlidArc) sont particulièrement prometteuses bien qu'encore très consommatrices d'énergie (plusieurs kilovolts par m³ de gaz produit). Les procédés GlidArc décrits pour l'instant nécessitent souvent pour réduire le CO2, l'utilisation de gaz additifs comme l'acide sulfurique (H2S) ou le méthane (CH4). Ces méthodes ne sont pas décrites pour oxyder des particules de char ou de charbon. Les additifs favorisant les réactions sont toujours des gaz. Les géométries décrites pour les procédés GlidArc rendent très difficilement l'optimisation des rendements des différentes réactions en fonction des flux des différents gaz. Les méthodes GlidArc génèrent des plasmas dits hors équilibre. Aucune description ne fait état de méthodes mixtes faisant intervenir de manière concomitante ou alternative un plasma hors équilibre avec un plasma thermodynamique. De même, aucune étude n'a fait état de procédés faisant intervenir des plasmas d'origine optique, des plasmas électriques hors équilibre et des plasmas thermodynamiques. Aucune étude ne fait état de procédés d'orientation des réactions se faisant dans un plasma par des enrichissements en métaux, particules, ou catalyseur, permettant ainsi de favoriser telle ou telle réaction dans un plasma.

La réduction du CO2 en CO et H2 est un verrou technologique majeur dans l'industrie des synthèses d'hydrocarbures. En effet, une grande partie (30 à 40 %) de la matière première (Charbon, Char) est perdue sous forme de CO2, ce qui rend, en plus du coût économique, cette industrie extrêmement polluante.

Nous proposons un procédé et une série de dispositifs alternatifs, adaptés à la gazéification des biomasses et du charbon, permettant des produire un syngaz (CO - H2) en diminuant les coûts énergétiques prélevés sur la biomasse ou le charbon pour la synthèse. En effet, l'énergie nécessaire aux différentes réactions est habituellement apportée par une combustion d'une partie du char ou du charbon. Dans le procédé décrit ici, une grande partie de cette énergie est remplacée par l'énergie solaire et l'énergie des différents plasmas produits tout au long du procédé. Les différents plasmas utilisés sont d'origine mixte et l'énergie électrique nécessaire à leur production provient d'énergies renouvelables (solaire, éolienne), ou d'énergie provenant de récupération thermique tout au long du dispositif. Les pertes de carbone, sous la forme de CO2, sont minimisées par l'utilisation de plasmas de différentes natures (électrique, micro-ondes, ICP, optique). Ces plasmas sont utilisés tout au long du procédé comme moyen supplémentaire pour oxyder le carbone en CO et réduire le CO2 en CO. L'action des plasmas est amplifiée par leur enrichissement par différents métaux ou éléments (Mg, Mn, AL, Fe, Si, Si02 ...) .

### Principe de fonctionnement

L'invention consiste en un procédé organisant une série d'unités fonctionnelles utilisant l'énergie de micro-ondes complétée par l'énergie thermique solaire et/ou l'énergie de plasmas pour réaliser les différentes étapes intervenant dans la gazéification de composés riches en carbone tels que par exemple des biomasses ou du charbon dans le but de produire un syngaz (CO, H2) destiné par exemple à la synthèse de carburants liquides.

D'une manière générale, tous les composés comportant du carbone peuvent convenir. En plus des biomasses, il est possible d'utiliser les ordures ménagères, de la pâte à papier, les boues provenant de l'épuration ou du pressage des eaux usées...

Dans la suite de ce document, les matières utilisées pour la gazéification seront appelées substrat. Le substrat sera préférentiellement conditionné ou aggloméré en particules ou granules plus ou moins humides, préférentiellement entre 10 et 30 % d'humidité.

La composition des granules sera préférentiellement reproductible par exemple grâce à un mélange de matières d'origines différentes (biomasse, boues d'épurations des eaux usées, ordures ménagères, pâte à papier ...). La proportion des différentes matières nécessaires pour réaliser les granules est définie préférentiellement à la volée, lors du mélange de ces matières, grâce à une analyse élémentaire des matières entrant dans la composition des granules. Par exemple un procédé LIBS (Laser Induce Brosken Spectroscopie ) sera utilisé pour définir la composition élémentaire de différentes matières qui seront au fur et à mesure mélangées selon des proportions définies par l'analyse pour fournir un granule avec une composition élémentaire reproductible.

Après une étape éventuelle de préparation du substrat, le procédé de gazéification de composés contenant du carbone pour la production d'un syngaz comprenant principalement du CO et H2, peut être décomposé en deux étapes principales :
A) une première étape de pyrolyse torréfaction des composés, en char et gaz de pyrolyse, dans un réacteur solaire micro-ondes, provoquée par un échauffement des composés contenus dans ledit réacteur solaire micro-ondes grâce à une énergie thermique synergique apportée conjointement d'une part, par l'échauffement des parois du réacteur grâce à la concentration par convergence ou réflexion d'un rayonnement solaire à la surface desdites parois, et d'autre part, par des micro-ondes injectées directement à l'intérieur du réacteur et des composés, et
B) une deuxième étape de transformation du char et des gaz de pyrolyse, provenant du réacteur solaire micro-ondes, principalement en CO et H2, par des réactions chimiques d'oxydoréduction se produisant dans un réacteur cyclonique, ledit réacteur cyclonique permettant la formation de vortex gazeux entraînant et oxydant les particules de char, grâce à la combustion des gaz de pyrolyse ou de gaz additionnel, à l'injection dans le réacteur cyclonique de gaz ou de mélanges de gaz échauffés, à un échauffement des gaz présents directement dans ledit réacteur sous l'action de micro-ondes injectées directement dans le réacteur cyclonique.

Les gaz utilisés pour réaliser les réactions d'oxydoréduction, sont chauffés, accélérés et mis sous pression sous l'action synergique d'une énergie thermique provenant de l'échauffement des parois d'un réacteur de chauffage de mise sous pression et d'accélération, par convergence et/ou réflexion d'un rayonnement solaire à la surface des parois dudit réacteur, et par des micro-ondes injectées à l'intérieur dudit réacteur.

Les réacteurs cycloniques et/ou les réacteurs de chauffage de mise sous pression et d'accélération comprennent des moyens pour produire des plasmas gazeux et des plasmas ou plasmons mixtes gaz/particules.

Les micro-ondes peuvent être utilisées en même temps qu'un rayonnement infrarouge préférentiellement à des fréquences correspondant aux fréquences d'absorption des modes de vibration asymétrique des molécules de CO2.

Le substrat de gazéification peut comprendre des particules hétérogènes comportant des particules des composés contenant du carbone, et des particules additives favorisant la gazéification éventuellement agglomérées ou fusionnées avec les particules des composés des composés contenant du carbone.

Les particules additives peuvent comprendre des métaux réducteurs qui favorisent la gazéification par des réactions d'oxydoréduction et la production d'éléments chargés et de radicaux libres sous l'action d'arcs électriques produits par des courants induits dans les particules, mais aussi des particules de silice et/ou de silicium produisant du SiO capable de fixer une partie du carbone contenue dans les composés sous forme de SiC.

La mise en oeuvre du procédé fait intervenir un réacteur solaire micro-ondes de pyrolyse torréfaction et un réacteur cyclonique :
- Le réacteur solaire micro-ondes de pyrolyse torréfaction comporte entre autres :
   - un tuyau , par exemple en matériau réfractaire,
   - des moyens pour faire progresser les composés à l'intérieur du tuyau du réacteur solaire micro-ondes de pyrolyse torréfaction,
   - des moyens pour concentrer et faire converger un rayonnement solaire à la surface du tuyau du réacteur,
   - des moyens pour isoler le tuyau du réacteur du milieu extérieur,
   - des moyens pour améliorer l'inertie thermique du tuyau du réacteur,
   - des moyens pour produire des micro-ondes,
   - des moyens pour guider les micro-ondes,
- le réacteur cyclonique comporte entre autres :
   - au moins deux unités cycloniques superposées ou emboîtées communiquant entre elles,
   - des dispositifs permettant des combustions qui induisent des vortex gazeux dans les unités,
   - des dispositifs d'injection latéraux ou tangentiels de gaz dans les unités, induisant des vortex gazeux,
   - des moyens pour produire et guider des micro-ondes.

La mise en oeuvre du procédé fait intervenir également entre autres :
- un réacteur de chauffage de mise sous pression et d'accélération des gaz d'oxydation comportant :
   - un tuyau, par exemple en matériau réfractaire
   - des moyens pour concentrer et faire converger un rayonnement solaire à la surface du tuyau du réacteur,
   - des moyens pour isoler le tuyau du milieu extérieur,
   - des moyens pour améliorer l'inertie thermique du tuyau du réacteur,
   - des moyens pour faire progresser les gaz et éventuellement les particules le long du tuyau du réacteur, en les compressant, en les chauffant et en les accélérant tels que sans être exhaustif, des rotors à aubes, des compresseurs centrifuges, des turbines, au moins une chambre annulaire, au moins une source de micro-ondes éventuellement complétée par une source d'infrarouges.
- des dispositifs de courants électriques induits ou non, d'optique, de micro-ondes, pour produire des plasmas gazeux et/ou des plasmons mixtes gaz/particules.
- au moins un magnétron et au moins un guide d'ondes pour produire des micro-ondes entre 1 GigaHertz et 300 GigaHertz et guider lesdites micro-ondes.

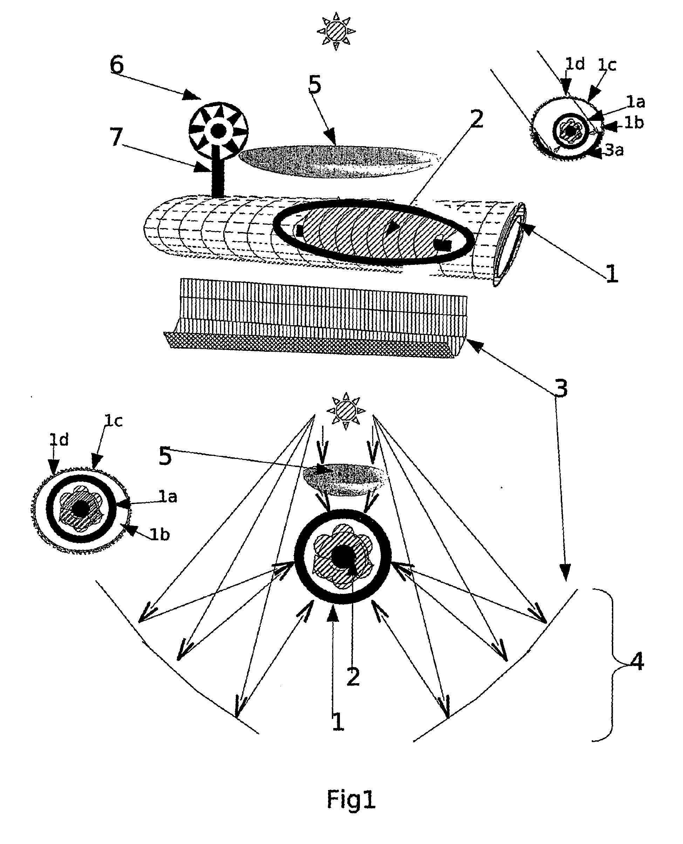

1.1 Dans un mode de réalisation, l'unité fonctionnelle permettant la torréfaction et la pyrolyse du substrat est un réacteur four solaire/micro-ondes (F_smo) constitué d'un tuyau Fig1.1 dont le diamètre est compris entre 1 centimètre et 5 mètres et d'une longueur comprise entre 10 centimètres et 10 mètres. Le tuyau sera par exemple en matériau réfractaire tel que sans être exhaustif, du carbone recouvert de céramique, céramique, acier tungstène, titane, nickel,..

Au centre du tuyau est disposée une vis sans fin Fig1.2 permettant l'avancée de la biomasse ou du charbon le long de la lumière du tuyau. Le substrat pourra être organisé en granules ou particules homogènes ou non, de taille comprise entre quelques millimètres à quelques centimètres. Dans la suite de ce document, granules et particules seront désignés sous le nom commun de granules. A l'extérieur du tuyau à une distance constante, le long de sa longueur est disposé un ou plusieurs miroirs ou concentrateurs solaires par exemple à aluminium Fig1.3 permettant de faire converger la lumière du soleil à la surface du tuyau. Le tuyau sera de préférence de couleur noire mate permettant un maximum d'absorption de la lumière et de la chaleur du rayonnement solaire. La peinture du tuyau pourra comporter des particules de silice de quelques microns de diamètre (particule quantique ou Qdot) optimisant l'absorption des rayonnements UV. D'une manière générale, le revêtement externe du tuyau pourra être recouvert ou constitué des matériaux permettant une absorption maximale de la chaleur et de la lumière, tels que ceux développés pour les chauffe-eaux solaires. Dans certains modes de réalisation, les miroirs sont par exemple des miroirs concaves ou ellipsoïdaux par rapport à l'axe principal du tuyau à vis sans fin, tel que le rayon de courbure soit égal à la distance séparant les miroirs de la surface du tuyau à vis sans fin. Dans un autre mode de réalisation, les miroirs pourront être des miroirs de faible largeur rectangulaire, disposés parallèlement à l'axe du tuyau à vis sans fin selon leurs longueurs, à une distance constante de la surface du tuyau. La distance entre les miroirs et la surface du tuyau sera définie telle que, la largeur de l'image ou le reflet du miroir à la surface du tuyau à vis sans fin soient inférieurs au diamètre du tuyau, afin que l'ensemble de la lumière réfléchie par un miroir arrive à la surface du tuyau. Selon une section du tuyau à vis sans fin, une série de miroirs sera disposée de manière à ce que la largeur des miroirs permette de suivre en escalier un demi cercle ou une section ellipsoïde quelconque autour du tuyau Fig1.4. Dans le cas de miroirs parfaitement plans, il suffit de disposer de miroirs dont la largeur est inférieure au diamètre du tuyau à vis sans fin. Chaque miroir aura une inclinaison plus ou moins importante par rapport à la tangente au support circulaire ou ellipsoïdal au niveau de la fixation du miroir, pour permettre de réfléchir la totalité de la lumière à la surface du tuyau à vis sans fin.

Toutes les situations intermédiaires faisant intervenir de multiples miroirs rectangulaires concaves selon une section du tuyau à vis sans fin, peuvent être envisagées. La distance entre les miroirs et la surface de la vis sans fin est définie par le rayon de courbure des miroirs. Cette distance peut être éventuellement raccourcie pour que la largeur de l'image du miroir sur le tuyau à vis sans fin soit comprise entre un point ( une ligne le long du tuyau) et la taille du diamètre du tuyau à vis sans fin. Le support des miroirs, en portion de cercle ou en portion ellipsoïde, pivotera autour du tuyau à vis sans fin, afin de fournir la meilleure réflexion de la lumière sur la surface du tuyau. De même, chaque miroir possédera éventuellement un axe propre lui permettant de pivoter par rapport à la tangente du support, pour offrir le meilleur angle de réflexion par rapport à la position du soleil. L'ensemble des mouvements des supports des miroirs ou ceux des miroirs eux-mêmes, pourra éventuellement être réalisé par un système motorisé contrôlé par ordinateur. La meilleure orientation sera déterminée par des cellules photoréceptrices disposées sur le tuyau à vis sans fin.

Préférentiellement les tuyaux à vis sans fin seront dirigés vers le sud dans leur longueur, pour le maximum d'ensoleillement. Une zone des miroirs située exactement à l'aplomb du tuyau à vis sans fin ne sera jamais illuminée. Les miroirs dans la zone d'ombre, seront éventuellement supprimés. La position de la zone d'ombre peut varier d'une orientation à l'autre du tuyau à vis sans fin, les ajustements sont réalisés en fonction de l'orientation. A l'aplomb de la zone d'ombre au-dessus du tuyau à vis sans fin sont disposées des lentilles convergentes Fig1.5 ou de Fresnel à une distance de la surface du tuyau à vis sans fin voisine de leur distance focale. Le nombre des lentilles dépendra de la taille et du diamètre du tuyau à vis sans fin. Les lentilles seront disposées sur un support dont les mouvements de rotation sont solidaires des rotations du portoir de miroirs de l'autre côté du tuyau à vis sans fin.

A différents points du tuyau à vis sans fin, sont introduites des micro-ondes de fréquence comprise entre 1 GigaHertz et 300 GigaHertz. Le nombre de sources de micro-ondes, comprises entre une et plusieurs dizaines, dépendra de la puissance souhaitée et de la consommation électrique envisagée pour l'installation. Dans certains modes de réalisations, ces sources de micro-ondes seront constituées d'un solénoïde entourant le tuyau à vis sans fin relié à un générateur de courant électrique de hautes fréquences. Sous l'action du courant alternatif, le solénoïde génère des radio-fréquences au sein du tuyau à vis sans fin.

Dans un mode de réalisation préférentiel, la source de micro-ondes est un magnétron Fig1.6. La partie de la vis sans fin faisant face à l'antenne du magnétron ou au guide d'ondes, est éventuellement constituée en une matière insensible ou transparente aux micro-ondes et électriquement neutre typiquement en céramique. La largeur du tuyau sera préférentiellement égale à un nombre entier de longueur d'onde «λ» des micro-ondes utilisées. Cette largeur pourra être modulée en fonction du déphasage «φ» dû aux réflexions sur les parois. La région du tuyau où sont introduites les ondes produites par l'antenne du magnétron est éventuellement recouverte sur la face intérieure, d'une matière pouvant réfléchir les micro-ondes, typiquement une feuille d'aluminium déposée sur un revêtement céramique (tout autre matériau réfléchissant les micro-ondes peut convenir). La zone recouverte du réflecteur s'étend de part et d'autre de la région où sont introduites les micro-ondes préférentiellement d'une longueur égale à λ/4 afin de favoriser les interférences constructives. Dans un mode de réalisation préférentiel, le matériau constituant le tuyau à vis sans fin réfléchira les micro-ondes.

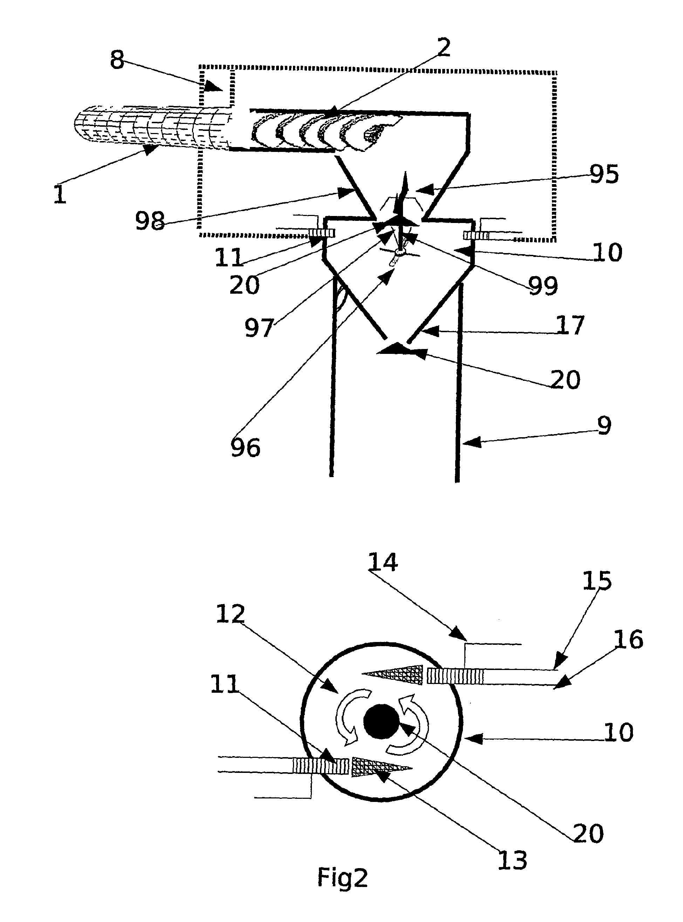

Les micro-ondes entraînent l'échauffement très rapide des molécules du substrat de gazéification, par l'agitation des molécules d'eau contenue dans les granules, ou de toutes autres molécules avec un moment dipolaire. La chaleur produite par les micro-ondes additionnée à la chaleur de convergence du rayonnement solaire, entraîne la torréfaction et la pyrolyse du substrat. Lors de cette pyrolyse, il se produit un dégagement de matières volatiles contenant du goudron, ainsi que divers autres gaz inflammables. Ces différents gaz sont récupérés par des cheminées de dégazage Fig2.8 pour être injectés dans un réacteur de gazéification. Avant leur injection dans le gazéificateur, ces gaz peuvent être surchauffés (entre 160 et 2000 °C) par apport de micro-ondes par un magnétron ou une autre source de micro-ondes.

1.2 Dans certains modes de réalisation, le tuyau du réacteur Fig1.1a sera inclus dans une enceinte Fig1.1c de confinement transparente sous vide, permettant de limiter les déperditions de chaleur avec le milieu extérieur.

Dans certains modes de réalisation, l'espace Fig1.1b compris entre l'enceinte de confinement et le tuyau sera rempli d'un gaz limitant la déperdition de chaleur avec le milieu extérieur. Il pourra s'agir de xéon, de krypton ou d'argon, ou tout autre gaz ou mélange de gaz permettant de limiter la déperdition de chaleur entre la surface du tuyau du réacteur et l'environnement extérieur. Dans un mode de réalisation préférentielle, l'enceinte sous vide sera un tuyau de verre ou de tout autre matériau transparent contenant le tuyau du réacteur. La paroi ou la surface Fig1.1d du tuyau pourra contenir des particules quantiques fluorescentes (particules de quartz) qui transformeront la lumière solaire ultraviolette en lumière visible ou infrarouge, lui permettant ainsi de franchir avec un bon rendement la paroi de l'enceinte de confinement.

Dans certains modes de réalisation, la face intérieure de la paroi comprendra une partie réfléchissante Fig1.3a permettant de refléchir la lumière à la surface du tuyau du réacteur.

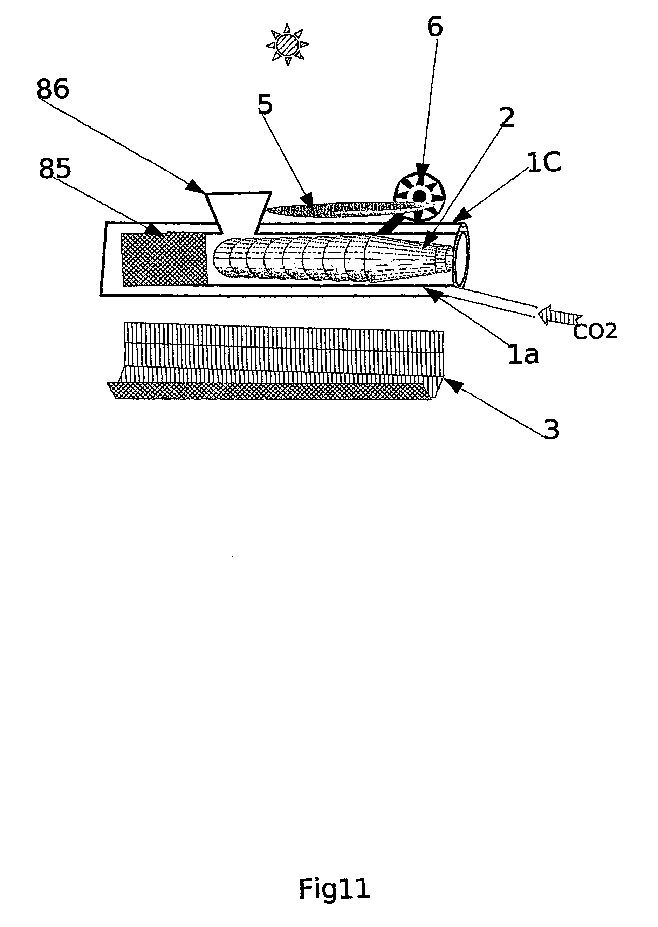

1.3 Dans une mode de réalisation préférentielle, une extrémité du tuyau du réacteur Fig11.1a F_smo est ouverte dans l'enceinte de confinement transparente Fig11.1c de manière à ce que le gaz limitant la déperdition chaleur puisse pénétrer à l'intérieur du tuyau du réacteur.

L'extrémité en question du tuyau du réacteur F_smo sera toutefois obturée par un corps poreux Fig11.85 obligeant à de nombreux contacts entre le gaz pénétrant dans le tuyau du réacteur F_smo et les mailles du corps poreux. Le corps poreux, de préférence en céramique, présente une grande surface d'échange et jouera le rôle d'absorbeur du rayonnement solaire améliorant l'inertie thermique du réacteur F_smo. Le corps poreux sera par exemple un monolithe multicanaux de type nid d'abeille par exemple en cordiérite ou une mousse de céramiques poreuses en carbure de silicium SiC. Le corps poreux sera par exemple recouvert ou contiendra des oxydes de type MₓO_{y} avec M préférentiellement choisi parmi Al, Si, Mn, Fe, Co, Ni, Cu, Zn, Ti, Zr. Les oxydes présents en surface ou dans le corps poreux, en plus de l'échauffement du gaz, catalyseront éventuellement la réduction du gaz traversant le corps poreux, par exemple CO2 en CO ou H2O en 02 et H2, dans le cas de l'utilisation du CO2 ou de H2O comme gaz limitant la déperdition de chaleur. Dans ce mode de réalisation, il sera préféré des gaz à effet de serre tels que CO2, NH4 ou H2O pour jouer le rôle de gaz limitant la déperdition de chaleur. Le gaz limitant la déperdition de chaleur est injecté dans la chambre de confinement à l'opposé de l'ouverture du tuyau du réacteur. Le gaz circule alors dans l'enceinte de confinement transparente en isolant la paroi du tuyau du réacteur F_smo de celle de l'enceinte de confinement transparente. Ce faisant, le gaz capture le rayonnement infrarouge provenant de la paroi du tuyau du réacteur F_smo échauffé par le rayonnement solaire et à l'intérieur par les micro-ondes, en s'échauffant lui-même durant son cheminement jusqu'à l'entrée du tuyau du réacteur. Le gaz s'engouffre alors au travers du corps poreux où il s'échauffe encore plus au contact de la structure poreuse. Sous l'action d'éventuels oxydes présents au niveau du corps poreux, le gaz peut être réduit. Le gaz ou sa forme réduite pénètre alors dans la partie du tuyau du réacteur contenant le substrat et la vis sans fin où il contribue à pyrolyser et torréfier le substrat.

1.4 Dans un mode de réalisation particulier, le réacteur four solaire/micro-ondes (F_smo) peut servir à apporter l'énergie nécessaire à d'autres types de réactions industrielles telles que la fermentation alcoolique à partir d'eau sucrée de jus de canne à sucre, ou des broyats de canne à sucre, mais aussi des réactions de digestion enzymatique nécessaire pour la fabrication du sucre et de l'alcool à partir de betteraves, du maïs, de la banane ...

Le système est alors réglé pour atteindre des températures plus faibles (30 à 40°C) permettant les réactions enzymatiques au cours de la transition des substrats dans le tuyau du réacteur sous l'action de la vis sans fin. Le réchauffement du substrat se fait au départ sous l'action des micro-ondes et de la convergence de la lumière à la surface du tuyau de réaction. Les enzymes nécessaires à la fermentation, digestion et aux isomérisations sont introduites selon l'ordre des réactions souhaité, après la source de micro-ondes, par des cheminées d'ajout de ferments.

D'une manière générale, le réacteur F_smo peut être utilisé dans toutes les réactions chimiques ou physico-chimiques de synthèse, de lyse, de changement de phase, d'un ou de plusieurs produits ou substrats nécessitant un apport calorifique pour déclencher et/ou entretenir les réactions, notamment les réactions de saponification ou d'estérification.

2.1 Après pyrolyse, le char ou le charbon est déversé dans un gazéificateur. Tous les types de gazéificateurs peuvent convenir. Le mode de réalisation préférentiel utilisera un gazéificateur mixte à Lit Fixe/Lit fluide à Cyclone (LFLC) ou plus généralement un réacteur cyclonique.

Dans un mode de réalisation particulier, le LFLC ce est composé d'un coeur constitué d'un tuyau avec un diamètre moyen compris entre 10 centimètres et 5 mètres Fig2.9. Le coeur peut être en acier inoxydable réfractaire, titane, zirconium, nickel, céramique, acier tungstène ou tout autre matériau supportant des températures supérieures à 800°C . Le substrat est déversé par une vis sans fin Fig2.2 vers une chambre de combustion cyclonique Fig2.10 surmontant le coeur du réacteur au travers d'une chambre de collection Fig2. 98.

La chambre de combustion permet de brûler les gaz provenant de la phase de pyrolyse additionnés éventuellement de gaz de combustion complémentaires tels que le méthane. Les gaz sont par exemple brûlés par deux brûleurs Fig2.11 placés de manières tangentielle à la chambre de combustion, afin que les flammes Fig2.13 entraînent le tournoiement des gaz Fig2.12 de combustion (essentiellement CO2, H2O) en formant un vortex de gaz descendant dans le cyclone et une colonne de gaz remontant dans le cyclone.

L'entrée de la chambre de combustion est partiellement obstruée par une structure en cône Fig2.20, tel que, la face inférieure du cône soit garnie de rigoles (ou d'ailettes) présentant une orientation similaire au sens de rotation du vortex gazeux de la chambre de combustion permettant ainsi la réorientation des gaz de la colonne remontant vers les vortex gazeux.

La face supérieure du cône comprend des rigoles qui forment avec le bord supérieur de la chambre de combustion, des conduits d'entrée pour que le substrat déversé de la vis sans fin puisse pénétrer dans la chambre de combustion. Les conduits d'entrée de la chambre de combustion sont orientés dans le sens de rotation du vortex de la chambre de combustion.

Un axe Fig2.99 traverse la structure conique par son sommet de telle sorte que celui-ci puisse être animé d'un mouvement de rotation. L'axe sera muni du côté de la chambre cyclonique de combustion d'un bouclier thermique Fig2.97 le protégeant de l'échauffement dû au gaz remontant. Dans la chambre de combustion, une hélice Fig2.96 est fixée sur l'axe de manière à faire tourner l'ensemble solidaire axe-hélice sous l'action de la colonne de gaz remontant. A l'autre extrémité de l'axe, dans la chambre qui reçoit le substrat, une lame Fig2.95 solidaire à l'axe telle que en tournant, la lame broie les granules de substrat déversés par la vis sans fin au travers de la chambre de collection. Le broyat est alors aspiré dans la chambre de combustion, au travers des conduits de la face supérieure de la structure en cône, grâce à un effet de Bernoulli, provoqué par l'écoulement de la colonne de gaz remontant, sur la face inférieure de la structure en cône, lors de la redirection des gaz remontant du cyclone vers le vortex tournant descendant. Dans certains modes de réalisation, la structure fermant le haut de la chambre cyclonique est un cône inversé, muni d'ailettes, dont le bord est recourbé vers la chambre cyclonique de combustion, permettant ainsi de mieux réorienter la colonne de gaz montant vers la chambre de combustion.

Le mélange gazeux brûlé dans la chambre de combustion (gaz de pyrolyse, air, gaz additionnel) peut éventuellement se faire directement dans la chambre de combustion grâce à trois tuyaux indépendants Fig2.14-15-16 alimentant un brûleur à gicleurs. Chaque tuyau diffuse un des trois gaz à la pression et à la vitesse désirées, la mise à feu du brûleur est déclenchée par une source d'étincelles (ou d'arcs électriques) disposée à proximité de celui-ci. Le rendement de la combustion est contrôlé par le débit de gaz de chaque tuyau.

Toutefois, tous les types de mélangeurs, détendeurs, de carburateurs, éventuellement associés à des débitmètres de gaz, peuvent être utilisés pour alimenter les brûleurs. Différents types de brûleurs peuvent également être adaptés. La mise sous pression des gaz injectés peut être obtenue grâce à des turbocompresseurs associant une turbine et une pompe ; la pompe comprime les gaz sous l'action de la turbine animée par de la vapeur d'eau ou par la détente d'un autre gaz ou par tout autre procédé de mise sous pression de gaz.

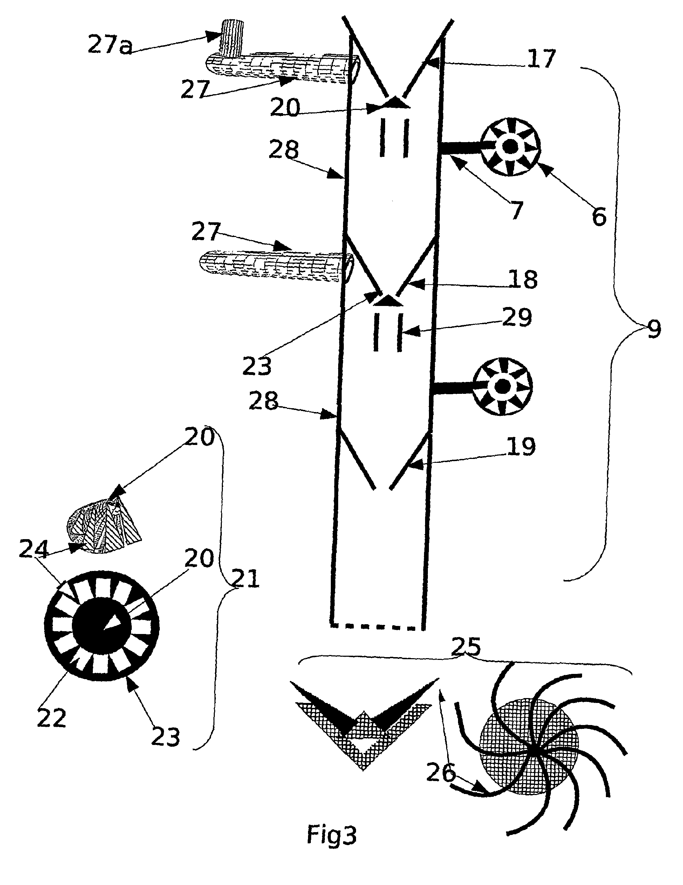

Le volume du coeur du réacteur est segmenté par des jupes successives Fig2.17,Fig3.18-19. Chaque jupe est constituée d'un cône percé dirigé vers le bas rétrécissant la lumière du réacteur à partir de la paroi du coeur. Ces jupes jouent deux rôles. Elles limitent le tassement de la colonne de granules, et elles créent des zones de vortex pour favoriser, soit la réaction :

C+H2O ↔ CO +H2 r1,

soit la réaction :

CO2+C↔2CO r2

La circulation circulaire des gaz, entraînant les granules torréfiés, permet une séquestration plus longue de ces granules dans les différents cyclones créés dans le LFLC par la succession de jupes. Un corps abrasif tel que du sable, des pierres ponces pilées ou tout autre matériau abrasif, peut être mélangé au char injecté dans les cyclones afin d'exercer une abrasion ou une érosion des particules de char grâce au mouvement tournoyant des gaz ainsi qu'une plus grande inertie thermique. Le sable ou le matériau abrasif permettra également d'adsorber la matière fondue (métaux encore présents dans le char) évitant ainsi le colmatage des pores et canules ou rainures du système. Une première jupe est placée après la chambre de combustion 17. A quelques centimètres en dessous de l'ouverture centrale de la jupe, une structure en cône 20 est disposée affin d'obstruer partiellement 21 l'ouverture de l'entonnoir que forme la jupe. Une série de conduits 22 sont créés entre le bord de la jupe 23 et la structure en cône 20 par un jeu d'ailettes 24, de façon à ce qu'il soit obligatoire de passer par l'un de ces conduits pour passer l'orifice de la jupe. La taille de ce conduit sera suffisante pour permettre le passage des granules torréfiés. Les conduits sont disposés de manière régulière selon une rotation d'un angle constant autour du sommet du cône obstruant la jupe. Les conduits seront éventuellement courbes ou obliques et orientés de telle manière qu'en les empruntant, les granules et les gaz soient projetés tangentiellement à la paroi du réacteur dans un mouvement de rotation allant dans le même sens que la rotation imprimée au gaz de combustion par des brûleurs. La face inférieure du cône 25 est garnie de rigoles (ou d'ailettes) 26 avec une orientation similaire à celle des conduits. Dans la chambre de combustion, les gaz de combustion, à une température supérieure à 800°C et animés d'un mouvement de rotation, vont attaquer les granules torréfiés qui se déversent de la vis sans fin. Une partie des granules sera oxydée selon les réactions r1 et r2, et va être entraînée par les gaz dans un mouvement circulaire au travers des conduits de l'orifice de la jupe. En dessous de la première jupe, à une distance comprise 10 et 500 centimètres (préférentiellement 50 centimètres), une seconde jupe Fig3.18 est disposée avec le même dispositif de cônes et de conduits que celui décrit ci-dessus, obstrue partiellement l'ouverture de la jupe. Il est alors injecté dans la partie haute de l'espace délimité par les deux jupes, tangentiellement à la paroi du réacteur Fig3.27, du CO2 ou un mélange H2O/CO2 sous pression à une température supérieure à 800 °C, typiquement à 1500 °C, dans le sens de rotation impulsé par les brûleurs. L'espace délimité par les deux jupes représente un cyclone à double entrée axiale et tangentielle Fig3.28. Dans un mode de réalisation préférentiel, le CO2 sera 5 fois plus abondant que le H2O dans le mélange de gaz injecté tangentiellement.

Dans certains modes de réalisation, en dessous de la zone d'introduction tangentielle du mélange de gaz, au moins un magnétron 6,7 (ou une autre source de radiofréquences) impulse des micro-ondes dans le réacteur entre les deux jupes. Les micro-ondes permettent de surchauffer le mélange de gaz injecté activant la réaction r2 et r1 et augmentent la vitesse du vortex de gaz et de granules. Lorsque les granules arrivent au niveau de la deuxième jupe, ils sont entraînés avec une partie des gaz par les conduits de l'orifice de la jupe, le reste des gaz débarrassé de la majeure partie des particules, remonte selon le centre du coeur du réacteur, en un flux montant, jusqu'à la face inférieure du cône supérieur obstruant partiellement l'orifice da la première jupe. Un cylindre est éventuellement disposé au centre du réacteur Fig3.29, dans le premier quart de l'espace défini par les deux jupes, afin de guider les flux de gaz remontant vers la face inférieure du cône de la jupe supérieure. Les rigoles gravées sur la face inférieure du cône impriment un mouvement de rotation au flux remontant et les redirigent vers les gaz tournants descendants du vortex avec le même sens de rotation.

Dans un certain mode de réalisation, en- dessous de la deuxième jupe, une troisième jupe partiellement obstruée par un cône est disposée pour former une nouvelle unité cyclone / micro-ondes. Il est alors injecté dans la partie haute de l'espace délimité par la deuxième et troisième jupe de la vapeur d'eau sous pression à une température supérieure à 800 °C, typiquement à 1500 °C, tangentiellement à la paroi du réacteur, dans le sens de rotation impulsé par les brûleurs et le cyclone précédents. En-dessous de la région d'injection de la vapeur d'eau, au moins un magnétron (ou une autre source de radiofréquences) impulse des micro-ondes dans le cyclone, permettant de surchauffer le H2O activant fortement la réaction r1 (5 fois plus rapide que la réaction r2 à la même température).

Les jupes peuvent éventuellement être reliées à une ou plusieurs sources à ultrasons permettant ainsi d'injecter des ultrasons dans le réacteur afin de briser les enveloppes de gaz appauvri en H2O et en CO2 qui se forment autour des granules et qui ralentissent les réactions de gazéification. Les ultrasons permettent également de fragmenter les granules durant la gazéification et de les rendre plus accessibles. Les jupes peuvent éventuellement être reliées à une source de vibration pour faciliter le passage des granules par les conduits.

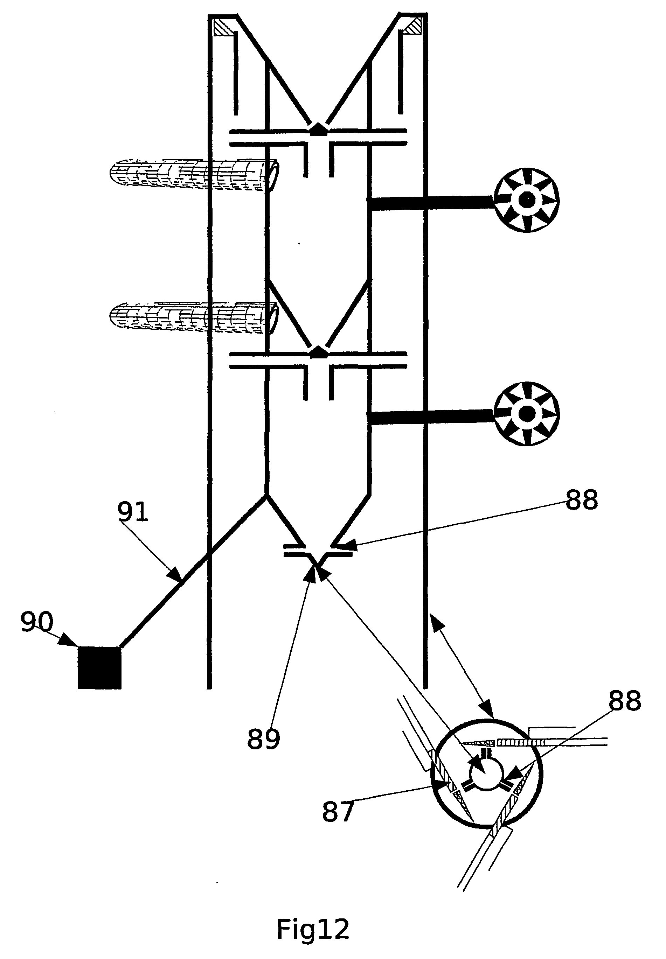

Dans certains modes de réalisation, des ultrasons de fréquence comprise entre 1 kiloHertz et 20 MegaHertz seront introduits à la jonction de la jupe avec le tuyau du coeur du réacteur Fig12.90-91. Les ultrasons permettront la formation d'aérosols provenant de l'explosion de cavités dans des liquides tels que les goudrons présents sur les parois du cyclone et aideront à la réduction de ces goudrons.

Les unités cyclone / micro-ondes, définies par deux jupes, peuvent être répétées un grand nombre de fois dans le LFLC avec des injections de CO2, de CO2/H2O ou de H2O dans n'importe quel ordre. Cette structure forme un réseau de cyclones superposés.

Un gaz complémentaire tel que le méthane peut être injecté tangentiellement dans les cyclones. Le méthane sera oxydé par l'eau et le CO2 en CO avec production de H2 selon les réactions :

CO₂ +CH₄ -> 2CO +2H₂ ΔH_{R}(600 K)= 205 KJ.mole⁻¹ r3

H₂O +CH₄ -> CO +3H₂ ΔH_{R}(600 K)= 205 KJ.mole⁻¹ r4

Le dégagement de H2 dans le réacteur ralentit la réaction r1 ce qui favorise la réaction r2 donc la consommation de CO2 et améliore la balance de pollution du système.

La région du coeur du réacteur de gazéification recevant les micro-ondes pourra éventuellement être recouverte d'un matériau réfléchissant les micro-ondes, typiquement de l'aluminium sur un support en céramique. Préférentiellement le coeur du réacteur est réalisé dans un matériau réfléchissant les micro-ondes et il pourra avoir un diamètre égal à un nombre entier de longueur d'onde «λ» des micro-ondes utilisées. Cette largeur pourra être modulée en fonction du déphasage «φ» dû aux réflexions sur les parois.

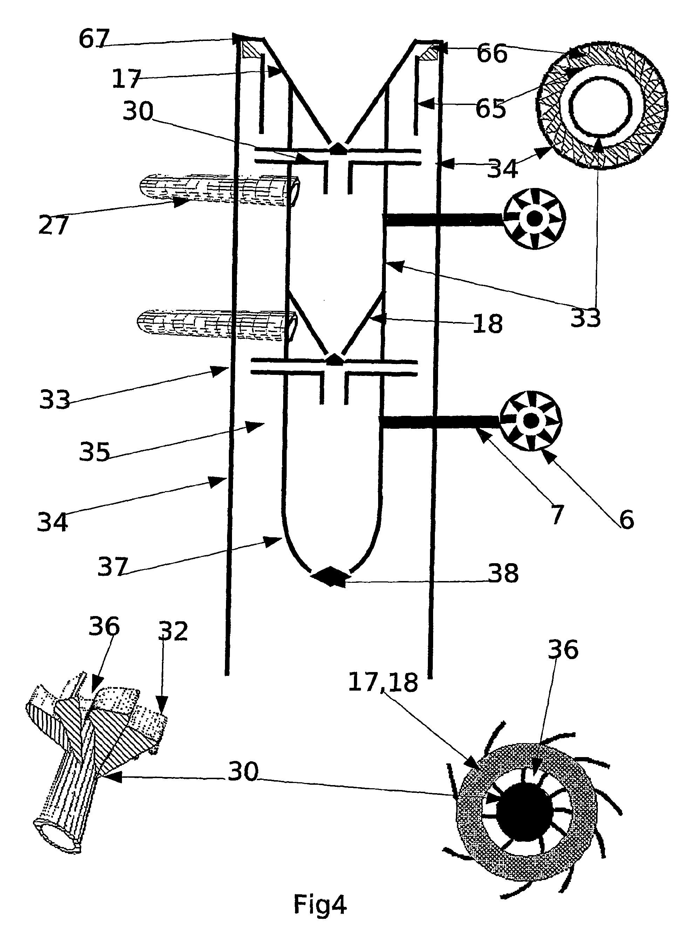

2.2 Dans un autre mode de réalisation, le coeur du réacteur sera constitué de deux tuyaux emboîté pour former un LFLC double coeur (LFLC_dc). Le tuyau interne du coeur comprendra les unités cyclone/micro-ondes décrites précédemment en «2.1». Les cyclones sont modifiés de telle sorte que le cône obstruant partiellement l'ouverture des jupes et le tuyau de remontée de flux au centre du cyclone, soient fusionnés pour former une structure creuse en T Fig4.30, permettant de rejeter les flux remontant du cyclone à l'extérieur du cyclone dans le tuyau externe du coeur. Le pied du T est constitué du tuyau de remontée des flux Fig4.31. La jonction entre le pied du T et la barre horizontale, est constituée par le cône. La barre horizontale du T représente les tuyères de sortie Fig4.32 des gaz, reliant par un tuyau creux le cône à l'espace situé entre le tuyau interne Fig4.33 et le tuyau externe Fig4.34 du coeur du réacteur. Nous appellerons la structure creuse horizontale identifiée comme étant la barre du T « tuyère horizontale »

Fig4.32. La tuyère horizontale permet donc le passage des flux remontant du cyclone par le tuyau central, vers l'espace entre les deux tuyaux emboîtés que nous appellerons l'espace inter-tuyaux Fig4.35. La structure en T peut être complexifiée en dupliquant les tuyères horizontales par rotation dans un même plan, perpendiculairement au tuyau de remontée des flux du cyclone. La portion des tuyères horizontales situées entre le cône et le bord des jupes est profilée en forme d'ailette, l'ensemble des ailettes étant orientées dans le même sens de façon à créer un système de conduits obliques pour l'entrée des gaz et des particules dans le cyclone situé en-dessous Fig4.36. L'orientation des ailettes sera définie pour imprimer un mouvement de rotation de même sens que le mouvement de rotation induit par les brûleurs dans la chambre de combustion (il sera choisi de préférence le sens induit par la force de Coriolis).

Des ailettes intercalaires peuvent être ajoutées à la structure « d'ailettes de tuyères» afin d'optimiser la taille des conduits sans avoir à augmenter le nombre de tuyères. Les tuyères horizontales seront courbées dans le sens de rotation général des gaz dans les réacteurs, ou disposées en oblique, pour permettre une entrée des gaz plus ou moins tangentielle à la paroi du tuyau externe du coeur du LFLC_dc. La sortie des tuyères sera légèrement dirigée vers le bas et arrivera à proximité de la paroi du tuyau externe. En raison de l'orientation des tuyères horizontales, l'entrée des gaz dans l'espace inter-tuyaux induira, dans cet espace, un mouvement de rotation des gaz dirigé vers le bas, formant un vortex descendant tournant dans le même sens que le mouvement induit dans la chambre de combustion.

Dans la partie inférieure du coeur du LFLC_dc, le tuyau externe sera plus long que le tuyau interne d'une longueur comprise entre 10 centimètres et 5 mètres, préférentiellement d'une longueur de 100 centimètres. Le tuyau externe formera à son extrémité un cône ouvert. Le cône sera par exemple formé sur une distance de 50 centimètres pour une extrémité de 100 centimètres. Ces distances ne sont qu'indicatives, de multiples conformations étant possibles. L'ouverture du cône aura un diamètre compris entre le diamètre du tuyau interne + 30% et le diamètre des orifices des jupes des cyclones du tuyau interne. Le tuyau externe du coeur du LFLC_dc forme donc un cyclone dans lequel est inclus le tuyau interne au niveau du flux ascendant du tuyau externe. L'extrémité inférieure du tuyau interne du coeur se terminera par une jupe présentant une courbure en obus Fig4.37 et un orifice avec un obturateur partiel présentant une géométrie particulière. L'obturateur sera constitué de deux cônes de tailles différentes ou de même taille Fig4.38 en vis-à-vis et accolés par leur base (bi-cône). Si les tailles diffèrent, le cône le plus petit obstruera partiellement l'orifice de la jupe alors que le cône le plus grand servira de coiffe protectrice dans le prolongement de la courbure en obus de la jupe. La structure bi-cône sera par exemple fixée par le bout pointu du petit cône sur un support disposé au travers de l'orifice de la jupe. La totalité ou une partie du bi-cône pourra éventuellement tourner autour de l'axe défini par la droite passant par les deux sommets. Préférentiellement seul le cône le plus grand (celui qui est dans le prolongement de la courbe en obus) tournera autour de l'axe. La face cônique du cône dans le prolongement de la courbure en obus sera éventuellement munie de motifs (ailettes et/ou rigoles) l'obligeant à tourner sous l'action du flux remontant du tuyau externe. Le flux central du cyclone du tuyau externe du coeur sera séparé et accéléré par le cône. La dépression créée par la séparation et l'accélération aspirera les granules torréfiés qui sortent du dernier cyclone du tuyau interne du coeur, et les entraînera plus ou moins loin. La partie mobile de la structure en bi-cône tournera sous l'action du flux permettant une expulsion plus efficace des granules. La présence du bi-cône empêchera le refoulement des particules dans le dernier cyclone du tuyau interne. La gazéification des granules s'achèvera dans le tuyau externe du coeur de réacteur, soit en phase dynamique dans les différents flux du cyclone du tuyau externe, soit en phase statique dans le lit fixe après accumulation au fond du tuyau externe.

L'ensemble des éléments traversant l'espace inter-tuyaux :
- tuyaux alimentant les cyclones du tuyau interne du coeur du réacteur en CO2, H2O et autres gaz,
- guides d'ondes impulsant les micro-ondes à l'intérieur des cyclones (dans le cas d'utilisation de magnétrons comme source de micro-ondes),
- sorties des tuyères de sortie des cyclones du tuyau interne,
seront profilés de manière aérodynamique pour ne pas gêner l'écoulement des gaz. Dans un mode de réalisation particulier les éléments dans l'espace inter-tuyaux sont recouverts de structures profilées fixes, orientées pour ne pas perturber l'orientation des flux. Ces profils ou structures profilées sont parallèles au flux des différentes régions du cyclone constitué par le tuyau externe du coeur du réacteur. Dans un mode de réalisation préférentiel, les structures profilées seront de petits segments mobiles autour des différents conduits qui s'orienteront seuls au mieux des flux des différentes régions du cyclone du tuyau externe du coeur du réacteur. Les structures profilées seront par exemple de petites structures rectangulaires ou trapézoïdales dont la longueur pourra varier de 0.5 centimètres à 1 mètre avec une section en forme d'aile d'avion ou de goutte d'eau tombante. Chaque structure profilée comportera un axe creux pivot parallèle à la longueur du rectangle ou du trapèze, permettant de la disposer sur les différents conduits traversant l'espace inter-tuyaux. Le pivot sera préférentiellement désaxé par rapport au centre de gravité pour permettre une orientation rapide et stable dans les différents flux. D'une manière générale, toutes les formes profilées aérodynamiques facilitant les écoulements des gaz ou des fluides pourront être utilisées pour former les structures profilées. L'ensemble des éléments passant dans l'espace inter-tuyaux pourra être profilé par des éléments mobiles aérodynamiques.

Les tuyères horizontales de sortie des gaz des cyclones du tuyau interne, pénètrent dans l'espace inter-tuyaux munies de structures profilées mobiles ou fixes. Les tuyères débouchent à proximité de la paroi du tube externe du coeur du réacteur tangentiellement avec une éventuelle orientation vers le bas. La distance entre les sorties des tuyères et la paroi du tuyau externe est comprise 0 et 95% de la distance entre les deux tuyaux formant le coeur du réacteur. Surmontant la sortie de la tuyère, une structure profilée est fixée à la paroi du tuyau externe du coeur du réacteur de telle sorte que le bord d'attaque de la structure soit dirigé vers le haut afin d'orienter le flux sortant de la tuyère vers le bas avec l'angle souhaité. Les flux de gaz sortant des tuyères horizontales sont donc organisés en vortex en courants tournants descendants. Le vortex attaque le lit de granules provenant du tuyau central et déposé au fond du tuyau externe. A ce niveau une forte gazéification est réalisée par l'attaque des gaz qui pénétreront profondément dans le lit pour remonter en un flux central entraînant les granules les plus légers.

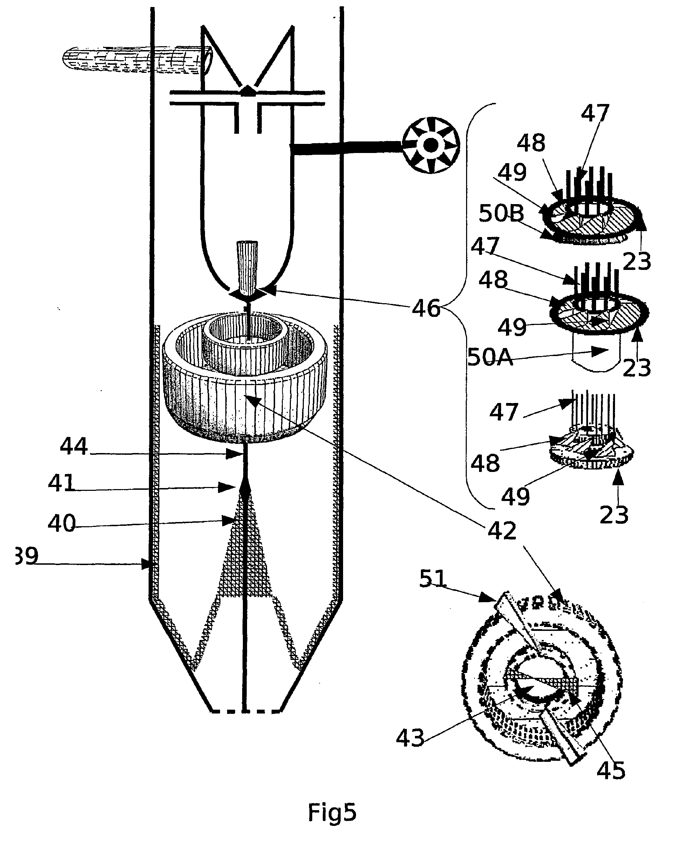

Toutefois, lorsque le lit de granules est trop important, le vortex ne peut traverser la totalité du lit. Pour lui permettre d'attaquer les granules les plus anciennement déposés, un grillage, dont les pores sont calibrés, est éventuellement disposé sur toute la partie de la paroi du tuyau externe délimitée par la région située entre le dernier cyclone du tuyau interne et le fond du tuyau externe Fig5.39. L'ensemble du tuyau interne peut être grillagé, en contrepartie d'une perte d'une partie de l'énergie cinétique du vortex, inversement la surface grillagée peut être diminuée pour diminuer la perte d'énergie cinétique du vortex. Pour diminuer la perte d'énergie cinétique du vortex, le grillage peut être réalisé dans une feuille de matière lisse percée de trous réguliers, ou être réalisé tel que sa trame la plus interne au coeur du réacteur (c'est-à-dire la première en contact avec le vortex) soit orientée dans le sens de rotation du vortex (± parallèle à la structure profilée fixée sur le tuyau externe qui sert à orienter la rotation du vortex).

Au niveau de l'orifice du cône du tuyau externe, le grillage est organisé en cône remontant vers le tuyau interne Fig5.40. La trame du grillage du cône la plus interne au coeur du réacteur (première en contact avec le vortex) sera parallèle à la direction principale (longueur) du tuyau externe ou inversée par rapport au grillage de la paroi du tuyau externe du coeur du réacteur. Le cône de grillage sera fermé à son extrémité, soit par le grillage lui-même, soit par une pièce en bi-cône Fig5.41 (cônes de même taille), sphérique, ovoïde, ou de n'importe quelle forme favorisant l'écoulement des fluides.

En arrivant au niveau du lit de granules torréfiés, le vortex pénétrera sous le lit par le grillage avec les particules les plus fines (de taille inférieure aux pores du grillage) et gazéifiera les particules du dessous du lit, puis le vortex se formera en colonne de flux montant autour et à l'intérieur du cône de grillage pour remonter au milieu du tuyau externe du coeur du réacteur. Une partie du gaz et des particules s'échappera par l'orifice du cône du tuyau externe du coeur, et sera récupérée pour des traitements postérieurs.

Dans certains modes de réalisation, une partie du tuyau externe, délimitée par la région située entre le dernier cyclone du tuyau interne et le fond du tuyau externe, sera rainurée par des sillons d'une largeur comprise entre 50 microns et 5 millimètres et une profondeur comprise entre 100 microns et 2 centimètres, dans un mode préférentiel les rainures auront 500 microns de large avec une profondeur de 2 millimètres. Dans la partie cylindrique du tuyau externe, les rainures seront parallèles au sens de rotation du vortex (± parallèles à la structure profilée fixée sur le tuyau externe pour orienter la rotation du vortex). Dans la partie conique du tuyau parallèle externe, les rainures seront, soit dans deux sens (parallèles au sens de rotation du vortex et perpendiculaires à ce sens), soit absentes. De même que pour la grille, les rainures peuvent diminuer l'énergie cinétique du vortex (bien que l'énergie locale dans les rainures soit augmentée par l'effet Venturi). L'ensemble du tuyau interne peut être rainuré, mais pour limiter les pertes d'énergie, il est préférable de limiter la surface rainurée. Dans certains modes de réalisation, la présence des rainures est combinée avec le grillage. Comme pour le grillage, les rainures permettent le passage du vortex sous le lit de particules, toutefois, les particules entraînées sont en moyenne plus fines.

2.3 Dans certains modes de réalisation, un rotor constitué d'un panier pourra accueillir les granules qui sortent du dernier cyclone composant le tuyau interne du gazéificateur. Dans un mode de réalisation préférentiel, un panier annulaire Fig5.42, creux en son centre (lumière) (Fig5.43) est disposé sur un axe (Fig5.44) rejoignant le centre de la lumière au cône du dernier cyclone du tuyau interne et le fond du LFLC_dc. L'axe est par exemple fixé par une croix ou une barre, disposé(e) au travers de la lumière de la jupe fermant le dernier cyclone du tuyau interne du réacteur. Le panier est fixé à l'axe par une ou plusieurs hélices disposées (Fig5.45) entre les parois de la lumière du panier, ce qui lui permet ainsi de tourner autour de l'axe. Préférentiellement, le galbe de ou des hélices sera dessiné pour que le flux remontant dans le tuyau externe du LFLC_dc, fasse tourner le panier dans le sens de rotation du vortex de gaz dans le tuyau externe. La lumière du panier sera éventuellement recouverte d'une coiffe grillagée en forme de bi-cône permettant de diriger les granules qui sortent du cyclone de l'étage supérieur dans le panier sans gêner le flux remontant.

La jupe de sortie du dernier cyclone, du tuyau interne LFLC_dc, sera éventuellement munie d'un système d'ailettes, formant des conduits vers l'espace inter-tuyaux au-dessus du panier. Ces conduits sont organisés autour d'un court cylindre grillagé Fig5.46. Le cylindre grillagé, formé de tiges métalliques verticales disposées à quelques millimètres les unes des autres Fig5.47 permet d'une part, la formation du flux remontant dans le cyclone, et d'autre part de filtrer les granules transportés par le vortex du cyclone et de les diriger à travers les conduits F5.48-49 vers le panier annulaire. Ce système de cylindre à grillage vertical pourra être adapté à toutes les sorties de cyclone. Sous l'action des micro-ondes, des courants induits dans les tiges provoqueront des arcs électriques catalysant dans leur voisinage la synthèse de CO et de H2. Dans certains modes de réalisation, une tige métallique sur deux sera isolée électriquement du support, les autres étant portées à la masse. Le cylindre grillagé peut se continuer par le cylindre de remontée des flux du cyclone inférieur Fig5.50a. Dans certains modes de réalisation, le cylindre de remontée des flux peut être remplacé par un court cône Fig5.50a.

Le bord externe du panier annulaire pourra être doté d'ailettes possédant la même pente que les structures profilées disposées sur la paroi du tuyau externe pour orienter le vortex. Les ailettes sur la paroi externe du panier du panier et les hélices de la lumière permettront au panier de tourner à une vitesse voisine de celle du vortex. La force centrifuge qui en résulte évite le tassement du lit de char ou de charbon au fond du réacteur. Dans certains modes de réalisation, les ailettes sur la paroi externe seront complétées ou remplacées par des ailettes de même courbure disposées sur le bord externe du panier et dirigées vers l'intérieur du panier Fig5.51. Ces ailettes serviront d'une part à faire tourner le panier sous l'action du vortex du tuyau interne, et d'autre part à rediriger une partie du flux du vortex vers l'intérieur du panier pour une gazéification plus efficace. Les parois du panier seront par exemple réalisées dans un grillage avec des pores calibrés ou dans une feuille de métal ou tout autre matériau percé de nombreux trous calibrés. Les parois externes du panier seront droites, ou courbés vers l'extérieur ou vers l'intérieur selon les vitesses de rotation atteintes par le rotor et la puissance de la redirection des gaz vers l'intérieur du panier dans les différents modes de réalisation.

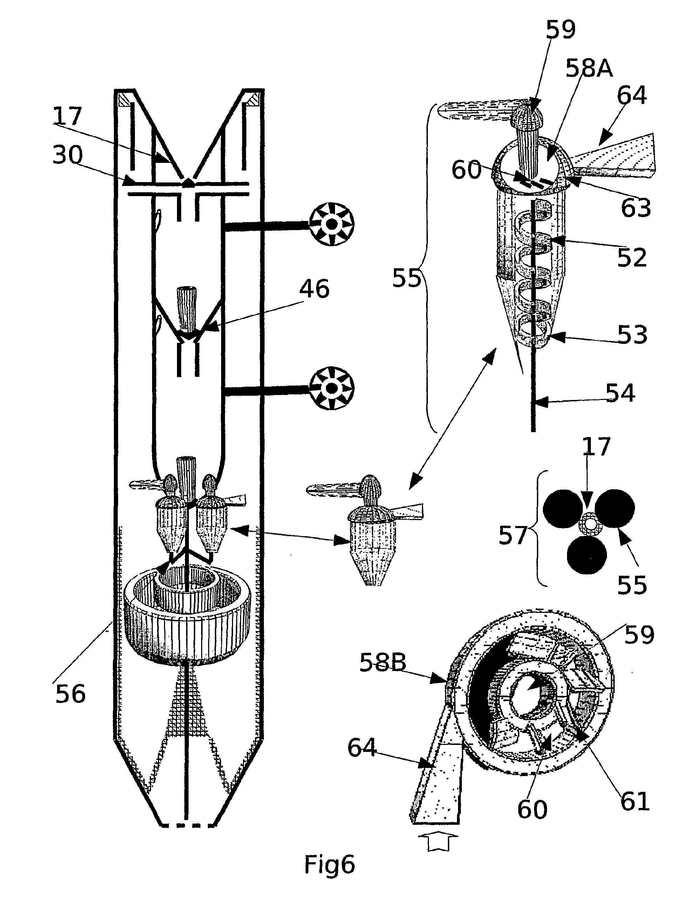

2.4 Dans un mode de réalisation particulier du réacteur LFLC_dc décrit en 2.2, à l'exception de la structure en T Fig6.30 située au niveau de la jupe fig6.17 fermant la chambre de combustion, l'ensemble des structures en T sont remplacées par un tuyau creux collé à l'orifice des jupes dans le cyclone intérieur à la jupe Fig6.46. Éventuellement le tuyau se prolonge dans le cyclone supérieur par un cylindre formé de tiges verticales disposées à quelques millimètres les unes des autres Fig5.47. Un système d'ailettes forme des conduits conduisant vers le cyclone inférieur Fig5.48-49. Ces conduits sont organisés autour du tuyau et du cylindre de tiges verticales. De ce fait, les flux remontant des différents cyclones, du tuyau interne du coeur, deviennent communs et sont évacués vers l'espace inter-tuyaux par la structure en T de la jupe fermant la chambre de combustion. Dans cette dernière configuration, en supprimant le bi-cône obstruant partiellement la dernière jupe du tuyau interne du coeur du réacteur, ou en le remplaçant par un cylindre ou un cône creux (une structure en cylindre grillagé Fig5.46), tout ou partie du flux remontant du cyclone formé par le tuyau externe du coeur, devient commun avec le flux remontant des cyclones du tuyau interne du coeur. Dans ces configurations, une partie des particules sortant des différents cyclones du tuyau interne sera refoulée dans les cyclones, ceci permettant une gazéification plus longue à leurs niveaux. Le flux montant du tuyau externe, qui ne passe pas par le tuyau interne, remontera le long du tuyau interne du coeur du réacteur. Toutes les situations intermédiaires de suppression d'une partie des structures en T sont possibles pour rendre commun le flux remontant de cyclones contigus. Dans ce type de configuration, l'alimentation tangentielle de certains cyclones du tuyau interne en gaz peut se faire à partir des gaz qui circulent dans le tuyau externe du réacteur. Par exemple les cyclones, dont la structure en T est remplacée par un court cylindre, peuvent posséder au moins un tuyau d'alimentation tangentiel en gaz qui s'ouvre au niveau de la paroi du tuyau externe du réacteur, en faisant face au sens de rotation des gaz, pour qu'ils s'engouffrent dans ledit tuyau d'alimentation. Le tuyau d'alimentation en gaz revient vers le cyclone du tuyau interne selon une direction tangentielle au tuyau interne pour permettre une injection des gaz rasant la paroi du cyclone, afin d'imprimer aux gaz une rotation à l'intérieur du cyclone dans le même sens que le vortex du tuyau externe.

D'une manière générale, les cyclones employés dans le gazéificateur sont à chargement tangentiel pour les gaz et longitudinal pour les granules et les gaz provenant de l'étage supérieur. Le tuyau interne du réacteur est donc composé d'une série de cyclones superposés et connectés permettant de transmettre les granules qui subissent une gazéification dans les cyclones successifs.

2.5 Dans un mode de réalisation particulier, au moins un des cyclones du tuyau interne du coeur du réacteur sera muni d'une électrode hélicoïdale en ressort accolé à une électrode couronne permettant l'établissement d'arcs électriques glissant le long de l'électrode hélicoïdale (Fig6.52).

Dans un mode de réalisation particulier, le cyclone comportant l'électrode sera le dernier cyclone du tuyau interne du coeur du réacteur et la jupe le terminant aura une forme de cône ou d'obus. Les parois de ce cyclone seront en matériau électriquement isolant. Les conduits d'entrée des particules et des gaz et le cône inversé ou le cylindre situé en haut du cyclone seront en métal ou en matériau conducteur électrique. Le haut du cyclone formera une électrode qui est mise à la masse et/ou reliée à un potentiel négatif. L'électrode en ressort sera disposée à proximité de la paroi du réacteur. La base du ressort se termine par une structure en couronne pour refermer la dernière spire sur elle-même Fig6.53. L'autre extrémité du ressort s'incurve pour repasser au milieu de la spirale du ressort, de manière à former un axe central Fig6.54. Le ressort est callé dans la partie cônique du cyclone par son extrémité comportant la structure en couronne. Au repos, le ressort se trouve à une distance comprise entre 0.5 millimètres et 2 centimètres de l'électrode du haut du cyclone. La tige axiale du ressort se prolonge et sort du cyclone par la lumière de la jupe inférieure. Cette tige centrale sera reliée à l'extérieur du réacteur à un système manuel ou automatique permettant d'actionner le ressort en le comprimant pour les raccourcir ou en l'étirant pour l'allongeant. Par exemple, la tige sera reliée à une autre tige perpendiculaire faite en un matériau électriquement isolant La tige perpendiculaire sort du réacteur et est par exemple reliée à un servomoteur ou un vérin électrique permettant de comprimer ou d'étirer le ressort. D'autre part, le ressort est relié à un générateur de courant alternatif, discontinu, ou continu à haut voltage pouvant délivrer 100 Volts à 1000 kiloVolts. Le ressort sera plus ou moins étiré ou comprimé selon la tension électrique appliquée, mais aussi la vitesse et la température des gaz circulant dans le cyclone. Cette compression ou étirement fait varier la distance entre le ressort et l'électrode au sommet du cyclone et la distance entre les tours de spirale du ressort, ce qui permet de régler la nature de l'arc glissant obtenu aux paramètres physico-chimiques et d'écoulement des gaz et des particules dans le cyclone. Sous l'action du potentiel électrique, des arcs se forment entre l'électrode de masse et le ressort. Ces arcs électriques sont ensuite poussés vers l'électrode couronne par le flux tournant dans le cyclone. Ces arcs interagissent avec les particules et les gaz traversant le cyclone, créant des molécules réactives (radicaux libres et molécules chargées) qui vont interagir entre elles et sur les granules pour former du CO, du H2 tout en limitant la production de méthane. Lors de la formation des arcs électriques, la variation de la circulation électrique dans le ressort entraîne des variations du champ magnétique induit par le solénoïde du ressort. Ces variations du champ magnétique vont augmenter l'énergie cinétique des molécules polaires et chargées, les rendant plus réactives.

Dans certains modes de réalisation, du méthane et de la vapeur d'eau seront injectés dans cet étage de cyclones GlidArc pour favoriser les réactions r3 et r4.

Dans certains modes de réalisation, des micro-ondes sont injectées à l'intérieur du cyclone. Sous l'action des micro-ondes, d'une part l'énergie cinétique des molécules chargées sous l'effet des arcs (en plus des molécules dipolaires ) augmente la température du gaz, le rendant encore plus réactif, et d'autre part des courants induits dans le ressort déclencheront des arcs électriques entre l'électrode en spirale et l'électrode en haut du cyclone. Sous l'action des micro-ondes, le cyclone à électrode hélicoïdale peut fonctionner en mode GligArc sans qu'elle soit mise sous tension électrique.

2.6 Dans certains modes de réalisation, au moins trois cyclones comportant chacun une électrode hélicoïdale Fig6.55, sont disposés en rosette Fig6.57 autour de la lumière de la jupe du dernier cyclone terminant le tuyau interne du LFLC_dc Fig6.58. Les électrodes hélicoïdales de ces cyclones seront construites sur le même principe que l'électrode décrite en (2.5), toutefois l'échelle de réalisation sera réduite. En effet, les tuyaux constituant les cyclones auront un diamètre compris ente 20 et 400 millimètres se terminant par un cône ouvert. Les axes des électrodes sont, soit reliés individuellement à l'extérieur du réacteur de la façon décrite en 2.5, soit tous les axes des électrodes sont reliés à une structure en étoile Fig6.56, permettant de les actionner en même temps. Dans certains modes de réalisation, la structure en étoile sera creuse en son centre, laissant passer l'axe de rotation du panier décrit en 2.3. Un axe creux partant de l'étoile est relié à un axe perpendiculaire électriquement isolant. Cet axe permet de comprimer ou d'étendre en même temps tous les ressorts des cyclones. La lumière de la rosette définie par les cyclones GlidArc constitue le passage du flux remontant commun au cyclone que représente le tuyau externe et aux cyclones superposés du tuyau interne. En partie haute de chaque cyclone à arc glissant, un tuyau d'alimentation en gaz est implanté de manière tangentielle à la paroi du cyclone, le tuyau s'ouvre dans l'espace inter-tuyaux en faisant face au vortex du tuyau externe à proximité de sa paroi Fig6.64. La disposition du tuyau d'alimentation permet à une partie des gaz du vortex du tuyau externe de s'engouffrer dans les cyclones de la rosette, créant un vortex dans chacun d'eux. La partie haute de chaque cyclone sera fermée par des couvercles Fig6.58 percés en son centre par le passage d'un cylindre creux formant un tuyau dans la partie haute du cyclone Fig6.59. Ce cylindre permet de récupérer le flux remontant au centre du cyclone à arc GlidArc, pour le conduire dans l'espace inter-tuyaux. La partie du cylindre se trouvant dans l'espace inter-tuyaux, est courbée et se dirige vers la paroi du tuyau extérieur du LFLC_c, de telle façon que l'orifice d'ouverture soit à proximité de la paroi du tuyau externe. Dans un mode de réalisation, le tuyau de remontée des flux des cyclones GlidArc est courbé pour délivrer les gaz dans le sens de rotation du vortex de gaz du tuyau externe du réacteur. Dans un mode de réalisation préférentiel, le tuyau de remontée des flux des cyclones GlidArc est courbé pour délivrer les gaz perpendiculairement au sens de rotation du vortex de gaz dans le tuyau externe du réacteur. Dans cette configuration, les gaz du flux remontant sont aspirés par la dépression créée par le vortex selon la loi de Bernoulli.

La partie du couvercle des cyclones GlidArc située du côté de la jupe du dernier cyclone du tuyau interne, est percée de fentes Fig6.60 encadrées par des ailettes obliques Fig6.61 permettant l'entrée des gaz dans le cyclone GlidArc en leur imprimant une rotation de même sens de rotation que celui du vortex du cyclone. Les fentes auront une taille suffisante pour laisser passer les granules provenant de l'étage supérieur. Ces fentes seront connectées par une canalisation Fig6.63 aux conduits de sortie des gaz et des granules du cyclone de l'étage supérieur, ces conduits étant organisés autour d'un court cylindre de colonnes verticales disposées sortant de l'orifice de la jupe du cyclone supérieur. Le couvercle des cyclones GlydArc est réalisé en matériau conducteur de courant, de manière à former une ou deux électrodes mises à la masse et/ou à un potentiel négatif.

2.7 Les granules utilisés pour la gazéification peuvent contenir des particules d'aluminium ou d'oxyde d'aluminium, de magnésium ou d'oxyde de magnésium, ou tout autre métal pouvant jouer le rôle d'un réducteur. Sous l'action des micro-ondes, des courants induits dans les particules conductrices génèrent des arcs électriques entre particules, créant ainsi sur leur passage, des radicaux libres et des éléments chargés. Les radicaux libres et les ions formés réagissent entre eux et avec le carbone présent dans le réacteur pour produire du CO et du H2. D'autre part, des atomes d'aluminium réduits par les arcs électriques et/ou les atomes de magnésium, décomposent les molécules d'eau pour libérer du H2, ou décomposent les molécules de CO2 pour libérer du C. Des cascades de réactions plus ou moins complexes aboutissent à la formation de CO et de H2. Les oxydes d'aluminium et de magnésium produits sont régénérés en cours de réaction en aluminium et en magnésium par l'action des arcs électriques et des rayonnements UV des plasmas induits par les arcs électriques et les micro-ondes dans le réacteur.

Dans un autre mode de réalisation, il sera ajouté aux granules de charge du gazéificateur des particules de SiO2 (silicium) ou un mélange de particules de Si (Silice) et de SiO2 finement broyées de taille homogène ou inhomogène comprise entre 1 nanomètre et 2 millimètres.

Ces particules à base de silice vont produire sous l'action de la chaleur, du monoxyde de carbone et du carbure de silicium SiC, composé inerte capable de piéger durablement du carbone, améliorant la balance de pollution de la gazéification.

Selon la réaction :

SiO₂ +3C -> SiC +2CO r5Si+CO₂->SiC +O₂ r6

Si+O₂-> SiO₂ r7

Si+2H₂O->SiO₂+2H₂ r8

Si + Si02 <-> 2SiO r9

Si +CH₄ <-> SiC +2H₂ minoritaire r10

Si +C -> SiC minoritaire r11

Si02 + 3CH₄ -> SiC + 2CO +6H₂ r12

Ou une combinaison quelconque des réactions r 5 à r19 ...

Ces particules, à base de silicium ou de silice, peuvent être ajoutées sous forme de fines particules (inférieures à 500 microns) dans les gaz injectés dans la gazéification.

Le SiC obtenu après la gazéification pourra servir de catalyseur pour les synthèses de Fischer Tropsch.

Le SiO2, le SiO et le SiC résultant de ces réactions sont inertes à température ambiante et représentent sous la forme SiC un moyen de piéger le carbone provenant du CO2 et de le stocker.

2.8 Au sommet du tuyau externe du LFLC_dc, un tuyau est emboîté entre le tuyau interne et le tuyau externe du réacteur Fig4.65, il s'agit d'un tuyau pour guider en fin de parcours le flux remontant, le long du tuyau interne du coeur (guide de flux) . Le guide de flux est disposé un peu en retrait par rapport aux deux tuyaux interne Fig4.33 et externe Fig4.34 du coeur. Des ailettes Fig4.66 sont disposées entre le tuyau externe et le guide de flux, avec une inclinaison similaire à celle de la structure profilée disposée sur la paroi du tuyau interne, au-dessus des tuyères de sortie des cyclones. La chambre de combustion débouchant dans le tuyau interne est placée au-dessus du coeur du réacteur, le fond de cette chambre Fig.4.67 est fixé en haut du tuyau externe et du tuyau interne du réacteur. Le fond du réacteur forme avec le tuyau interne une loge circulaire, séparée par un rideau d'ailettes inclinées d'une seconde loge formée avec le tuyau externe. En remontant entre le tuyau interne et le guide de flux, les gaz du flux remontant se réchauffent dans la chambre formée avec le tuyau interne et le fond de la chambre de combustion. Les gaz échauffées passent à travers le rideau d'ailettes où leur est imprimé un mouvement tournant descendant, du même sens de rotation que le sens impulsé aux gaz dans la chambre de combustion. Les gaz entre alors dans la région formée par le tuyau externe et le guide de flux pour former un vortex tournant descendant le long de la paroi du tuyau externe du réservoir.

2.9 Dans un mode de réalisation particulier, des micro-ondes seront impulsées dans le tuyau externe du coeur du réacteur. Ces micro-ondes pourront par exemple être injectées en-dessous du tuyau interne, dans la région cylindrique du tuyau externe, à partir d'au moins une source à micro-ondes, de préférence un magnétron.

2.10 Dans certains modes de réalisation, des mélanges de gaz constitués de toutes les proportions possibles (C02, H2O, CH4) sont injectés tangentiellement à la paroi du tuyau externe dans l'espace inter-tuyaux.

2.11 Dans un mode de réalisation particulier, les rayonnements solaires seront convergés ou réfléchis en une image à la surface du coeur de réacteur. L'image réfléchie aura une taille inférieure ou égale au diamètre du coeur du réacteur afin que toute l'énergie réfléchie soit absorbée par le réacteur, la région recevant le rayonnement sera de couleur noire et le revêtement contiendra éventuellement des particules quantiques pour éviter toute réflexion des rayonnements UV. La convergence ou la réflexion pourra par exemple être réalisée à l'aide de miroirs plans, sphériques, ovoïdes, ou par de multiples miroirs plans ou sphériques montés sur une structure plane, ovoïde ou sphérique. Une lentille convergente simple, ou une lentille de Fresnel pourra éventuellement être utilisée pour faire converger les rayons lumineux. De manière générale, la réflexion ou la convergence du rayonnement solaire sur le réacteur pourra utiliser n'importe quel type de fours solaires, ou moyen de réflexion de la lumière pour réfléchir la lumière solaire à la surface du réacteur. Les régions recevant le rayonnement solaire seront réalisées en métaux ou alliage de métaux, ou recouvertes de métaux ou d'alliage de métaux pouvant supporter des températures élevées de plus de 1000°C, de préférence des températures supérieures à 2000°C.

2.12 Dans un autre mode de réalisation, le tuyau externe du LFLC_dc, sera muni d'au moins un hublot en quartz ou tout autre matériau transparent résistant à des températures de 1500°C. Les rayonnements solaires seront convergés ou réfléchis en une image à l'intérieur du coeur de réacteur (à travers le hublot) par un des procédés décrit en 2.11. Les images auront une taille inférieure ou égale au diamètre du hublot afin que toute l'énergie solaire pénètre à l'intérieur du réacteur. Dans certains modes de réalisation, l'injection de lumière solaire pourra se faire, que ce soit pour les réacteurs à coeur simple tube ou les réacteur à coeur double tube, directement dans la chambre de combustion.

Dans d'autres modes de réalisation, l'injection du rayonnement solaire est réalisée dans la chambre de combustion en utilisant directement une lentille de Fresnel à large diamètre (comprise en 50 centimètres et 10 mètres). La lentille fera converger les rayonnements solaires au centre de la chambre de combustion.

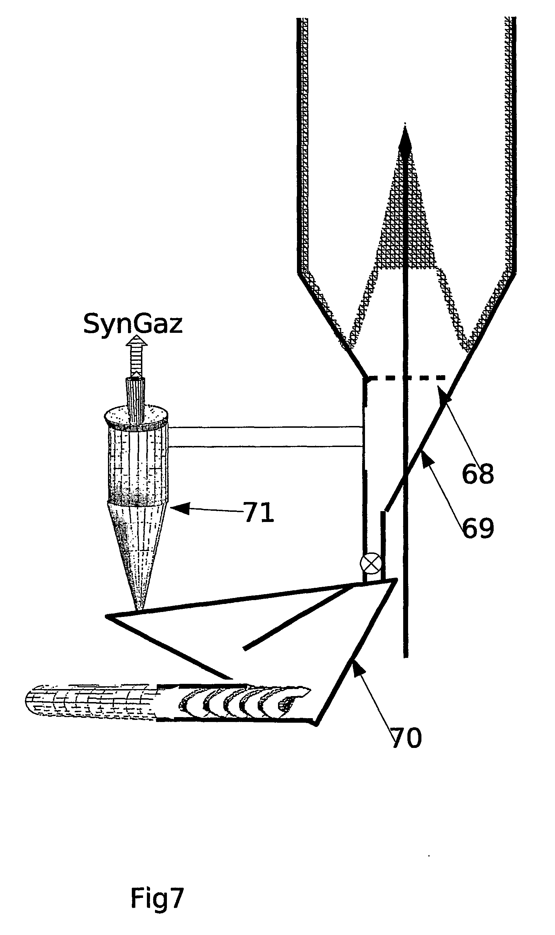

2.13 Après le passage dans le dernier cyclone, les granules se déposent au fond du réacteur ou du panier pour achever leur gazéification. Le fond du réacteur correspond à la dernière partie du tuyau formant le coeur de type LFLC ou du tuyau externe des réacteurs de type LFLC_dc. L'ouverture du fond du réacteur sera obstruée par une grille Fig7.68 dont les trous seront assez grands pour laisser passer les cendres et les particules de charbon de très petite dimension (de l'ordre de quelques millimètres). La taille des pores sera comprise entre 500 micromètres et 0.5 millimètres. La grille sera mobile, elle pourra descendre ou remonter et tourner, soit par un système de vis actionnée manuellement ou motorisée, soit par un système de vérin hydraulique ou pneumatique, soit par un système de vis et de ressort, ou tout autre système permettant d'assurer une combinaison des trois mouvements. Dans certains modes de réalisations, le système permettant de déplacer la grille lui communiquera en même temps des mouvements rapides de vibration de bas en haut pour éliminer les cendres et éviter le tassement du lit de granules. La grille de fond pourra également être reliée à une source à ultrasons pour désincruster les cendres et favoriser la gazéification pour les raisons précitées. D'une manière générale, la totalité du réacteur peut être relié à des sources à ultrasons continues ou alternatives (par pulses) pour faciliter le passage des flux dans les rainures, les grillages ou le lit de granules et favoriser la gazéification. Après la grille une structure hémi-cônique Fig7.69, permet de diriger les cendres dans un réservoir à cendres Fig7.70. Le réservoir et la structure hémi-cônique sont séparés par un système d'isolement, par exemple une vanne pneumatique ou tout autre système permettant d'isoler le réservoir de cendres de la structure cônique. Un tuyau relie la structure hémi-cônique à l'entrée d'un cyclone de séparation gaz/particules Fig7.71. Une pompe ou turbopompe éventuellement être intercalée entre la structure hémi-cônique et le cyclone de séparation, elle permet de réguler la sortie du gaz du réacteur. Dans certains modes de réalisation, le cyclone de séparation sera un cyclone à charge tangentielle et décharge axialle, tout autre type de cyclone peut convenir, de même que des systèmes basés sur des centrifugations ou des filtres.

La sortie des cendres du cyclone de séparation débouche dans un second réservoir à cendres. Les deux réservoirs sont reliés par une vis sans fin permettant d'évacuer et de récupérer les cendres. Dans un certain mode de réalisation, la sortie des cendres du cyclone de séparation débouche dans le même réservoir à cendre que le gazéificateur Fig7.70

Dans le cas d'utilisation de biomasse pour fabriquer du char, les cendres obtenues sont riches en potasse qui sera utilisée pour saponifier des huiles végétales, dans le but de fabriquer des esters et du glycérol (principe de fabrication de savon). Ces réactions peuvent êtres faites dans le réacteur four solaire / micro-ondes (F_smo) décrit en 1.3.

La réaction d'estérification se décompose par exemple en 4 étapes.
1) Saponification des graisses et huiles.
2) Séparation des Acides gras saponifiés et du glycérol.
3) Activation des acides gras saponifiés, par exemple par une réaction avec un halogénure de phosphore (X₃P) (X=I,Br,Cl,F ...), pour former du RCOOPX2 ou RCOX (phospho diester ou halogénure d'alcaloïde).
4) Réaction entre l'alcool et l'ester activé pour former un ester d'alcool.

La réaction d'activation peut éventuellement être obtenue avec un acide fort tel que HX en formant des halogénures d'alcool.

2.14 Dans un mode de réalisation particulier, le dernier cyclone du coeur intérieur (tuyau interne) du réacteur cyclonique sera terminé par un cône inversé fermé Fig12.89. De la paroi du cône partent des tubes dans une direction perpendiculaire à l'axe principal du cyclone Fig12.88. que nous appellerons puits d'aspiration dans la suite de cet exposé. Préférentiellement, trois puits d'aspiration sont disposés à 120° les uns des autres. En vis-à-vis de chaque puits d'aspiration et perpendiculairement à la direction du puits, est disposé un brûleur Fig12.87 permettant de brûler les gaz de pyrolyse ou des gaz additionnels de telle manière que les gaz de combustion aient une direction perpendiculaire à l'ouverture du puits, aspirant ainsi les particules, qui arrivent au fond du dernier cyclone, vers la flamme du brûleur par un effet de Bernoulli. De plus, la direction des flammes des brûleurs plus ou moins parallèles à la direction du vortex, entretient le vortex de gaz créé dans le tuyau externe du réacteur à double coeur. Le système puits d'aspiration-brûleurs permet d'extraire ainsi les cendres qui tombent au fond du dernier cyclone du tuyau interne et de gazéifier les dernières particules de carbone qui n'ont pas encore réagi.

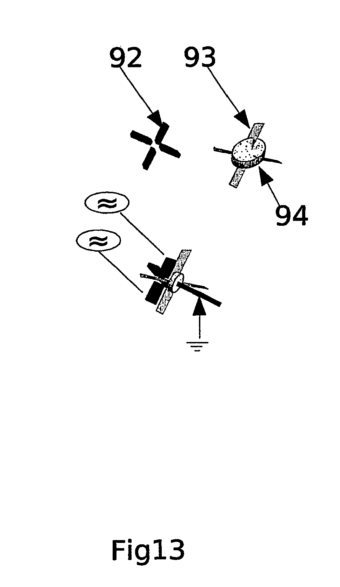

2.15 Dans un mode de réalisation particulier, les procédés à arc électrique glissant (GlidArc) utilisés pour réduire différentes formes chimiques indésirables qui peuvent se former lors de la gazéification, telles que H2S ou N03 etc , comprendront un système d'électrodes, composé d'une hélice Fig13.93 ou d'un rotor à aubes tournants et d'une grille fixe en croix Fig13.92 ou en étoile multibranches, introduit à différentes places dans les réacteurs cycloniques ou Tb_smo. Chaque bras de la grille sera porté à un potentiel électrique, continu ou alternatif entre 100 Volts à 1000 kiloVolts, alors que l'hélice ou le rotor à aubes sera relié à la masse. En tournant sous l'action des gaz circulant dans les réacteurs, chaque pale de l'hélice ou du rotor passe en vis-à-vis d'un barreau de la croix ou de l'étoile. La distance entre le rotor ou l'hélice et la croix ou l'étoile sera telle qu'un ou plusieurs arcs électriques pourront se former entre ladite pale et un barreau de la croix ou de l'étoile. En s'éloignant du barreau, la pale étire l'arc électrique, lui conférant ainsi les propriétés d'un arc glissant générant des plasmas hors équilibre. Le scénario de la formation et de l'étirement des arcs électriques se reproduit à chaque passage d'une pale de

l'hélice ou du rotor en vis-à-vis d'un barreau de l'étoile ou de la croix. Dans certains modes de réalisation, la connexion à la masse et au potentiel électrique peut être inversée entre le rotor ou l'hélice et l'étoile ou la croix.

Dans certains modes de réalisation, des disques disposés au niveau du rotor ou de l'hélice Fig13.94 et/ou de la croix ou de l'étoile permettent d'améliorer le rendement des réactions catalysées.

Le dispositif GlidArc hélice / rotor et croix / étoile peut être disposé à différents endroits du procédé notamment au niveau des conduits en T de l'expulsion des gaz remontant des cyclones du tuyau intérieur du réacteur cyclonique ou encore après le réacteur de gazéification à la sortie du cyclone de séparation entre le gaz et les cendres.

3.1 Les gaz (CO2, H2O, CH4, 02) alimentant le réacteur cyclonique de gazéification peuvent être comprimés, accélérés et chauffés par différents procédés utilisant des pompes et des fours conventionnels. Toutefois, dans un procédé particulier, l'ensemble des gaz alimentant le réacteur cyclonique à gazéification sont chauffés et mis sous pression par des turbopompes four solaire /micro-ondes.

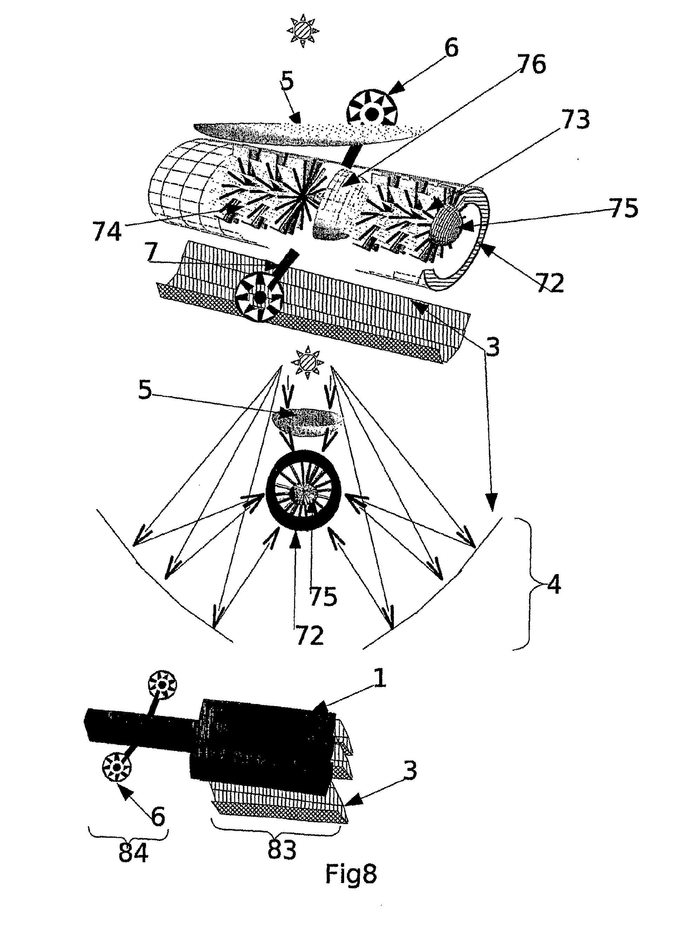

Une turbopompe solaire/micro-ondes (Tb_smo) est constituée d'un tuyau (Fig8.72) dont le diamètre est compris entre 1 centimètre et 5 mètres et d'une longueur comprise entre 10 centimètres et 5 mètres. Les dimensions des Tb_smo dépendront de la nature et de l'utilisation des gaz comprimés et chauffés. Préférentiellement les Tb_smo auront un diamètre de l'ordre de 20 centimètres et une longueur de l'ordre 1,5 mètre, pour comprimer et chauffer les gaz destinés aux cyclones. Ils auront un diamètre de l'ordre de 10 centimètres et une longueur de l'ordre de 70 centimètres pour chauffer et comprimer les gaz destinés aux brûleurs de la chambre de combustion. Le tuyau constituant le Tb_smo pourra être confiné dans une enceinte transparente sous vide ou contenant des gaz présentant les mêmes caractéristiques que celles de l'enceinte de confinement d'un F_smo.

Dans un mode de réalisation préférentielle, l'entrée du tuyau du Tb_smo s'ouvre dans l'enceinte de confinement transparente de manière à ce que le gaz limitant la déperdition de chaleur puisse pénétrer à l'intérieur du tuyau du réacteur Tb_smo.

L'entrée du tuyau du réacteur Tb_smo sera toutefois obturée par un corps poreux obligeant à de nombreux contacts entre le gaz pénétrant dans le tuyau du réacteur Tb_smo et les mailles du corps poreux. Le corps poreux, de préférence en céramique, présente une grande surface d'échange et jouera le rôle d'absorbeur du rayonnement solaire améliorant l'inertie thermique du réacteur Tb_smo. Le corps poreux sera par exemple un monolithe multicanaux de type nid d'abeille par exemple en cordiérite ou une mousse de céramiques poreuses en carbure de silicium SiC. Dans ce mode de réalisation, il sera préféré des gaz à effet de serre tels que CO2, NH4 ou H2O pour jouer le rôle de gaz limitant la déperdition de chaleur. Le gaz limitant la déperdition de chaleur est injecté dans la chambre de confinement à l'opposé de l'ouverture du tuyau du réacteur. Le gaz circule alors dans l'enceinte de confinement transparente en isolant la paroi du tuyau du réacteur Tb_smo de celle de l'enceinte de confinement transparente. Ce faisant, le gaz capture le rayonnement infrarouge, provenant de la paroi du tuyau du réacteur Tb_smo échauffé par le rayonnement solaire et les micro-ondes, en s'échauffant lui-même durant son cheminement jusqu'à l'entrée du tuyau du réacteur. Le gaz s'engouffre alors dans le tuyau du réacteur

Tb_smo, au travers du corps poreux où il s'échauffe encore plus au contact de la structure poreuse. Le gaz pénètre alors dans la partie du tuyau du réacteur jusqu'aux rotors où il est accéléré, compressé et chauffé.

Au centre du tuyau est disposé au moins un axe. Cet axe est garni sur 2 régions de rotors, situées sur le premier tiers Fig8.73, et le troisième tiers de l'axe Fig8.74. Chaque région de rotors est par exemple constituée de 3 rotors constitués de 60 ailettes ou aubes disposées tous les 6° selon une rotation autour de l'axe . Les ailettes sont plus ou moins inclinées, toutefois, l'inclinaison des aubes des rotors du dernier tiers de l'axe correspondant à l'étage des turbines peut être plus importante que celle des aubes du premier tiers correspondant à l'étage du compresseur. Le nombre de rangées de rotors n'est qu'indicatif, il peut être diminué ou augmenté selon la puissance ou la taille de la pompe. La taille et l'inclinaison des aubes dépendront de la pression que subira la turbine. Le nombre d'ailettes par rotor est seulement indicatif, il variera selon la taille et la puissance du Tb_smo. L'axe de rotor à éventuellement une forme ovoïdale Fig8.75 permettant de diminuer progressivement le volume à l'intérieur du réacteur au niveau de la première région de rotors. Dans cette même région, un renflement de la paroi du tuyau ou un ceintrage de celui-ci diminue progressivement la section du tuyau sur toute la partie de la première région de rotors. Dans la partie située derrière la première région de rotor, au niveau du deuxième tiers de l'axe, une chambre à micro-ondes annulaire Fig8.76 enserre l'axe de rotation des rotors. Dans certains modes de réalisation, la chambre annulaire est solidaire de l'axe et tourne avec lui. La paroi de la chambre annulaire qui enserre l'axe est plus longue que celle opposée à l'axe. La paroi de la chambre annulaire opposée à l'axe, forme avec la paroi du tuyau du Tb_smo un passage par lequel les gaz peuvent pénétrer dans la zone postérieure à la chambre annulaire. Les parois de la chambre annulaire sont réalisées dans une matière permettant la réflexion des micro-ondes et capable de supporter des températures élevées, de l'ordre de 2000°C, typiquement des alliages de titane d'aluminium, des alliages de tungstène de nickel, desaciers inoxydables, des carbone vitreux recouverts de céramique, des céramiques ou tout autre composé suffisamment réfractaire... Des micro-ondes sont injectées dans la chambre annulaire de manière à les faire réfléchir sur la paroi enserrant l'axe de rotation avec un angle adéquat pour les faire ricocher vers l'intérieur de la chambre annulaire. Les micro-ondes sont injectées juste après la paroi de la chambre annulaire opposée à l'axe. Les micro-ondes seront produites au moins par un magnétron. De manière préférentielle, quatre magnétrons Fif8.6 injecteront en croix des micro-ondes dans la chambre annulaire à micro-ondes. Les ondes sont injectées dans la chambre annulaire par l'intermédiaire de guides d'ondes Fig8.7, de manière générale toute source de radiofréquences énergétiques pouvant être dirigée par le biais de guides d'ondes par exemple sont utilisables. Sous l'action des micro-ondes, les gaz contenus dans la chambre annulaire subissent un échauffement important qui les dilate et les expulse au travers des rotors du dernier tiers de l'axe. Sous l'action du passage des gaz dans le rotor du dernier tiers, l'axe se met à tourner, les aubes du rotor du premier tiers de l'axe impulsent des gaz vers la chambre annulaire en les comprimant du fait du rétrécissement de la section. Les gaz comprimés et chauffés par les micro-ondes dans la chambre annulaire entretiennent le mouvement par leur expulsion au travers des aubes des rotors du dernier tiers de l'axe. Dans la configuration où les miroirs et les lentilles sont régulièrement répartis le long du tuyau du Tb_smo, l'énergie solaire thermique n'intervient dans la compression des gaz que par la dilatation uniforme causée par l'accumulation de chaleur (PV=NRT). Toutefois, pour que la chaleur thermique solaire soit transformée également en énergie cinétique de compression, la surface de miroirs et la taille des lentilles peuvent être localement augmentées au niveau de la région des rotors du troisième tiers de l'axe. L'énergie solaire supplémentaire apportée à ce niveau échauffera encore plus les gaz, accélérant la vitesse de l'axe donc la compression.

Dans certains mode de réalisation, les rotors du premier tiers de l'axe peuvent être remplacés par un compresseur centrifuge. Dans cette configuration, le diamètre du tuyau du Tb_smo sera augmenté au niveau de l'étage de compression pour pouvoir l'accueillir.

Le Tb_mso peut servir de base pour concevoir de nouvelles générations de turboréacteurs utilisés pour la propulsion de véhicules (aériens, terrestres, marins ...). Il est possible d'augmenter la puissance d'un réacteur par l'ajout, entre l'étage, ou les étages de compression et les étages de turbine d'un réacteur, d'une chambre annulaire à micro-ondes contenant des guides d'ondes injectant des micro-ondes provenant de magnétrons conduisant ainsi une détente encore plus importante des gaz. Cette détente pourrait être augmentée par l'ajout d'eau qui serait vaporisée par les micro-ondes et participerait à la propulsion. Ce procédé permettrait de limiter les conséquences d'une présence d'eau dans le carburant, l'eau présente dans les carburants serait vaporisée par les micro-ondes et servirait à la propulsion.

La consommation électrique des magnétrons peutêtre compensée en introduisant perpendiculairement à l'axe de rotation un ou plusieurs aimants barres « teslas » (par exemple un barreau de 2.5 Teslas avec une aimantation orientée longitudinalement). Les barreaux aimants pourraient être directement des aubes des rotors de l'étage de compression par exemple. Perpendiculairement au plan de rotation des aimants, une ou plusieurs bobines, faite de fils de cuivre ou de tout autre métal, de fils de supraconducteur (par exemple une tresse de nanotube de carbone, etc ), est disposée dans ou sur le tuyau du Tb_smo ou du turboréacteur. La rotation de l'axe entraînera la production d'un champ magnétique tournant perpendiculairement au plan de la bobine, ceci permettant de produire une grande quantité de courant électrique.

Le H2O possédant des moments dipolaires élevés ( 1,85), l'échauffement et la compression de ce gaz par le Tb_mos sera très efficace. En sortie des Tb_mos les gaz échauffés pourront être directement injectés dans les différents cyclones du réacteur cyclonique de gazéification. En revanche, le méthane, le CO2 et l'air présentant en moyenne des moments dipolaires plus faibles, ils devront préférentiellement être mélangés à de la vapeur d'eau pour être chauffés et mis sous pression par un Tb_smo avant d'être injectés dans les brûleurs de la chambre de combustion.

Les gaz de pyrolyse naturellement riches en eau pourront être chauffés et mis sous pression efficacement par un Tb_smo avant d'être injectés dans la chambre de combustion.

Une alternative pour éviter l'ajout d'eau au gaz consiste à le ioniser par des décharges électriques durant son contact avec les micro-ondes.

Une partie de la vapeur d'eau utilisée dans les réacteurs cycloniques à gazéification sera produite à partir d'eau liquide évaporée dans un four solaire/micro-ondes (F_smo). Le reste de la vapeur d'eau provient de l'eau contenue dans la biomasse ou produite lors des combustions dans la chambre de combustion. La pression des gaz injectés varie entre 1 et 2000 atmosphères.

3.2 Dans certains modes de réalisation, le Tb_smo permet de projeter dans l'entrée tangentielle des cyclones du sable ou un autre corps abrasif tel que de la pierre ponce pilée, du carbure de silicium ou tout autre corps abrasif Fig3.27a. Cette projection de corps abrasifs permet d'éroder très rapidement les particules de char augmentant l'efficacité de la gazéification.

Dans certains modes de réalisation, le corps abrasif sera préalablement chauffé entre 200 et 600°C par un F_smo avant d'être projeté tangentiellement dans les cyclones ou éventuellement mélangé à la matière première lors de la phase de torréfaction ou de pyrolyse afin d'accélérer celle-ci.

3.3 Dans certains modes de réalisation, F_smo sera sectorisé en une partie solaire et une partie micro-ondes. La partie solaire sera organisée en peigne Fig8.83 afin d'augmenter l'efficacité du chauffage. L'ensemble des dents du peigne est relié à un seul tuyau comprenant les sources de micro-ondes. Dans un mode de réalisation encore plus préférentielle, les dents du peigne sont remplies par des corps poreux s'ouvrant dans l'enceinte de confinement.

Dans certains modes de réalisation, les extrémités du peigne s'ouvriront à l'air libre permettant ainsi d'aspirer de l'air et de le chauffer. L'air chaud pourra être utilisé pour sécher la matière première avant la torréfaction ou la pyrolyse.

Des montages similaires peuvent être envisagés pour le Tb_smo.

Dans certains modes de réalisation, les sources de micro-ondes peuvent être couplées à des sources de rayonnement infrarouge. Cette deuxième source de radiofréquences induit des mouvements asymétriques dans les molécules. En effet, l'énergie infrarouge est essentiellement absorbée par les vibrations des liaisons chimiques des molécules. Ceci crée, en plus de l'élévation de la température de la molécule, des modes de vibration asymétrique ponctuels générant un moment dipolaire transitoire. Des molécules apolaires deviennent donc sensibles transitoirement aux micro-ondes.

Dans certains modes de réalisation, l'association de micro-ondes et de fréquences infrarouges sera utilisée pour échauffer des gaz tel que le CO2 pour les différentes configurations envisagées.

4.1 Dans certains modes de réalisation, le réacteur cyclonique de gazéification sera entièrement calorifugé, y compris le cyclone de séparation des gaz et des cendres après sortie du réacteur cyclonique. Cette isolation thermique pourra être obtenue, par exemple en recouvrant toutes les parties en contact avec l'air ambiant d'un produit calorifuge (laine de roche, céramique ....)

Dans une réalisation particulière, l'ensemble du réacteur cyclonique sera enfermé dans une enceinte calorimétrique ou thermos qui maintiendra un vide poussé entre les parois du réacteur cyclonique et l'enceinte de confinement. Le vide sera, soit statique par scellement de l'enceinte calorimétrique, soit dynamique, par pompage de l'air contenu dans l'enceinte calorimétrique. Ce pompage pourra par exemple se faire à l'aide d'un Tb_smo ou Tb_smo pouvant ioniser les gaz.

4.2 En sortie du réacteur cyclonique de gazéification, après passage dans le cyclone de séparation des poussières et des gaz, le mélange gazeux composé majoritairement de CO et de H2 peut contenir plus ou moins de CO2 non réduit. Selon les réglages de la gazéification, la composition du gaz de sortie sera en pourcentage (n'incluant pas la vapeur d'eau) de 37 % CO, 27% H2, 7% CO2, 6% 02, 1.5% CH4. Ces proportions ne sont qu'indicatives et peuvent varier fortement selon le réglage de l'appareil. Toutefois ces valeurs indiquent que les proportions de CO et de H2 peuvent ne pas correspondre à celles nécessaires aux synthèses de Fischer-Tropsch. Pour rectifier les déséquilibres, il convient de séparer le CO2 des autres gaz. Toutes les méthodes de séparation du CO2 d'avec les autres gaz peuvent être utilisées, notamment les méthodes cryogéniques.

Toutefois, ces procédés sont très consommateurs d'énergie.

Dans un mode de réalisation particulier, il sera utilisé le fait que le CO2 a un coefficient de solubilisation dans l'eau (76.6 10⁻³ moles/litre à 0°C et 1.013 bar) très supérieur à celui du CO (1.5 10⁻³ moles/litre à 0°C et 1.013 bar), du CH4 (2.4 10⁻³ moles/litre à 0°C et 1.013 bar), du H2 (0.9 10⁻³ moles/litre à 0°C et 1.013 bar).

En sortie du cyclone de séparation des gaz et des cendres, les gaz traversent un ou plusieurs échangeurs thermiques, dans lesquels ils cèdent leur chaleurs à :
- De l'eau
- De la vapeur d'eau
- Du CO2
- Au mélange de syngaz destiné à réagir dans un réacteur Fischer Tropsch
- Aux produits destinés à être raffinés
- D'une manière générale, à tout produit nécessitant de la chaleur au cours de son cycle de transformation.

Après avoir été ramené à température ambiante, le mélange gazeux est mis à buller dans un réservoir de séparation contenant de l'eau. Le volume d'eau du réservoir pourra être compris à titre indicatif entre 10 et 1000 litres. Le volume du réservoir peut dépasser les 1000 litres pour de très grands volumes de gaz à traiter. Le réservoir est hermétiquement clos, une valve en position haute (au-dessus de l'eau) permet la sortie des gaz non dissous. Le réservoir de séparation est éventuellement thermostaté à une température comprise entre 0 et 35°C. L'injection des gaz dans le réservoir se fait à une pression comprise entre 1 et 100 bar. La température du réservoir peut être en-dessous de 0°C si l'eau contient des antigels ou des produits salins permettant une meilleure dissolution (la température peut varier de -20°C à + 35°C).

De l'eau est pompée du réservoir, avant d'y être réinjectée après dégazage. Le pompage a lieu à une grande distance du point de bullage des gaz, dans une zone où il ne subsiste aucune bulle en suspension. Le débit d'eau pompée peut être proportionnel au débit de bullage des gaz dans le réservoir. Il peut être réglé en fonction de la proportion de CO2 dans le mélange gazeux et de la vitesse de solubilisation du CO2 de manière à optimiser la dissolution du CO2 et à limiter celle des autres gaz. La proportion de CO2 dissous dans l'eau va dépendre des caractéristiques physico-chimiques de l'eau, notamment le pH et la concentration saline. Le pH sera de préférence basique pour augmenter le taux de dissolution du CO2. Ce pH pourra notamment être ajusté à partir des cendres provenant de la gazéification du char généralement riche en potasse. Le CO2 se dissout rapidement dans l'eau alors que les autres gaz passent en majorité dans la partie aérienne de la cuve. Selon l'origine de la matière première utilisée pour réaliser la pyrolyse, les gaz sortants du réacteur cyclonique de gazéification seront plus ou moins contaminés par des NOx, des HSx, des métaux lourds, etc.

Ces composés ontgénéralement des coefficients de solubilisation très importants dans l'eau (ou dans certains mélanges de solvants) et seront donc dissous lors du bullage dans un solvant approprié. Dans certains modes de réalisation, l'eau (ou tout autre solvant) pompée du réservoir sera traitée par un procédé d'osmose inverse ou de filtration pour concentrer en une saumure les différents solutés dissous au bullage, y compris le CO2 dissous sous forme H2C03. De nombreux traitement de l'eau existent déjà et peuvent être utilisés (dessalage, épuration de l'eau, distillation ... ).

L'eau pompée en flux laminaire directement ou éventuellement après filtration est dégazée par soumission aux ultrasons, ou à un vide poussé, ou à échauffement rapide. Une combinaison de ces trois traitements peuvent être appliquée simultanément ou séquentiellement. Préférentiellement, l'eau sera dégazée par l'action du vide et des ultrasons. Les gaz provenant du dégazage sont majoritairement constitués de CO2 et éventuellement de NOx et de HSx. Le CO2 pourra être réintroduit dans un cycle de gazéification en étant réintroduit dans le réacteur cyclonique de gazéification après chauffage s'il est suffisamment pur. Le mélange de gaz obtenu pourra éventuellement subir une réduction en phase liquide/gaz à l'interface d'un plasma créé par un arc électrique entre deux électrodes creuses ou poreuses de carbone. Durant cette phase de réduction, des NOx et des HSx seront réduits en soufre ou N2 ou en composés avec un nombre d'oxydation intermédiaire (cette réduction pourra être complétée par traitement électrique de type GlidArc).

Les électrodes de carbone utilisées pour ces réductions pourront contenir des additifs tels que l'aluminium, ou le magnésium, ou tout autre métal réducteur par exemple sous forme de poudre fortement agglomérées avec des particules de carbone. Ces métaux favorisent la production de CO et de H2 en réagissant avec l'eau, CO2 ou le carbone des électrodes. Les oxydes de métal générés par les réactions d'oxydoréduction sont régénérés sous l'action des courants électriques et de la lumière intense du plasma, notamment MgO est réduit en Mg et en oxygène (l'oxygène réagira avec le carbone) sous l'action du plasma. Les électrodes de carbone peuvent éventuellement contenir des additifs de Si et ou du Si02 qui réagiront avec l'eau, le CO2 et le carbone pour produire du CO et du dihydrogène et du SiC. Les additifs peuvent également être présents dans l'eau de réacteurs à plasma. La répartition des poudres d'additif dans les électrodes sera homogène ou inhomogène, par exemple en couches successives séparées par des couches ne contenant que du carbone. Le carbone des électrodes proviendra par exemple des cendres récupérées par la vis sans fin qui passe dans les réservoirs à cendre du réacteur cyclonique à gazéification et du cyclone de séparation des gaz et des cendres.

Après refroidissement, un ou plusieurs échangeurs thermiques récupèrent au niveau de la vis sans fin pour chauffer des produits nécessitant de la chaleur au cours de leur cycle de transformation, les cendres froides sont lavées dans un cyclone hydraulique. Elles sont alors broyées en particules très fines, homogènes ou inhomogènes, avec une taille comprise entre 1 micromètre et 1 millimètre. Les particules sont éventuellement mélangées à différents composés (particules de métaux, phosphore, Si, Si02, etc) favorisant la réduction du CO2 et l'oxydation du carbone. Une pâte est réalisée à partir des particules, elle sera moulée ou filée et compressée en électrode, après l'ajout éventuel d'un agent de cohésion comme une colle ou une résine résistante à l'eau faite à base d'un composé carboné par exemple ou un ciment quelconque.

Après leur réduction dans le plasma de l'arc électrique, les gaz récupérés subiront une nouvelle étape de séparation.

L'eau de lavage des cendres très basiques à cause de la potasse qu'elles contiennent, sera utilisée pour augmenter le pH du réservoir d'eau de séparation des gaz, ou comme saumure de saponification des graisses et des huiles dans un F_smo destiné à cet effet chapitre 1.3 et 2.13. De manière générale, l'ensemble des eaux de bullage et de lavage seront retraitées par osmose inverse, filtrées et subiront une réduction électrique par électrodes creuses de carbone.Des méthodes de distillation peuvent également être envisagées.

4.4 Les gaz récupérés de la partie aérienne de la cuve de séparation forme un syngaz majoritairement composé de CO et H2. Les gaz sont récupérés au travers de valves calibrées pour s'ouvrir à une pression redéfinie. Il reste toutefois de faibles pourcentages de CO2, CH4, et 02 de l'ordre de 1 à 3% pour chaque composé.

Pour que la réaction (FT)

| | |
|---|---|
| (FT genérale): n CO +2n H₂-> -(CH₂)- +nH₂O ΔH₂₉₈= -165 KJ.mole | |
| formation d'alcanes : | n CO +2(n+1) H₂-> CH₂ₙ₊₂ + n H₂O |
| | 2n CO +(n+1) H₂-> C H₂ₙ₊₂ + n CO₂ |
| | |
| formation d'alcènes : | n CO +2n H₂-> C H₂ₙ +nH₂O |
| | 2n CO +n+ H₂-> C H₂ₙ +nCO₂ |
| | |
| formation d'alcools : | n CO +2n H₂-> C H₂ₙ₊₁OH+ (n-1) H₂O |
| | 2(n-1) CO +(n+1) H₂-> C H₂ₙ₊₁OH+ (n-1) CO₂ |

ait un bon rendement, il est nécessaire que la stoechiométrie de l'équation soit respectée dans le mélange syngaz utilisé. En effet, le rapport CO/H2 oriente les réactions majoritaires dans la synthèse FT. De plus, en raison de diffusions différentes entre CO et H2 dans les différents réacteurs existants, la composition du syngaz doit souvent être ajustée selon le réacteur FT utilisé. Enfin, il est important de diminuer au maximum les gaz secondaires CH4 et CO2 produits lors de la gazéification.

Dans un premier temps, l'eau contenue dans le syngaz sera éliminée par condensation de la vapeur d'eau, par exemple dans une tour réfrigérante ou tout moyen permettant d'amener le syngaz à une température voisine de 0°C. La compression du gaz de réfrigération pourra éventuellement être réalisée par un Tb_smo. L'eau liquide produite entraînera une partie du CO2 présent dans le syngaz. Le CO2 de l'eau de condensation sera récupéré par dégazage et réintroduit dans le circuit de synthèse.

Le syngaz sec sera humidifié par de la vapeur d'eau à un pourcentage défini par le rapport CO/H2 final désiré.

Puis le syngaz humidifié sera de nouveau chauffé à une température comprise entre 200 et 1200°C, par exemple dans un Tb_smo ou un simple four solaire/micro-ondes creux (sans turbine ni vis sans fin) ou tout autre moyen.

Ceci permet de produire du H2 à partir du CO contre une production indésirable de CO2, selon la réaction :

CO + H2O -> H2 +CO2 ΔH_{R}(600 K)= -39 KJ.mole

Le CO2 produit peut-être éliminé selon un des procédés décrits précédemment, mais ceux-ci peuvent risquer de déséquilibrer la formule du syngaz.

Il sera préféré une méthode de réduction du CO2 électrochimique faisant intervenir des plasmas.

5.1 Dans un mode de réalisation particulier le réacteur électrochimique sera réalisé sur la base d'une turbopompe solaire/micro-ondes où les partie « solaire » (miroirs et lentilles) été supprimée ou réduite à la seule partie situé au niveau de la deuxième région de rotors et de la chambre annulaire pour obtenir un Réacteur solaire /micro onde ou une Réacteur micro-ondes (R_smo). Le tuyau formant le R_smo aura de préférence un diamètre compris entre 10 et 20 centimètres et sera par exemple réalisé dans un matériau électriquement isolant, tel que le du pyrex , du quartz ... Des matériaux conducteurs peuvent convenir à condition de contrôler le parcours des courant induit. Dans le cas d'utilisation de matériaux transparent aux micro-ondes le R_smo sera enchâssé dans une structure réfléchissant les micro-ondes par exemple un tube en aluminium ou tout autre matériaux réfléchissant les micro-ondes aux moins pour la région du R_smo soumis au micro ondes (qui correspond a la région postérieur à la première région de rotors). Au moins un rotor de la première région de rotors sera constitué d'aubes soit en matériaux électriquement isolants soit isolés de l'axe des rotors. Lesdits rotors auront au moins une aube électriquement conductrice en contact avec l'axe des rotors, qui sera lui même électriquement conducteur et connecté à la masse. Sur la paroi du R_smo, dans le plan de rotation du rotor est disposée au moins une électrode soumise à un courant compris entre 100Volts et 1000 kilo Volts.

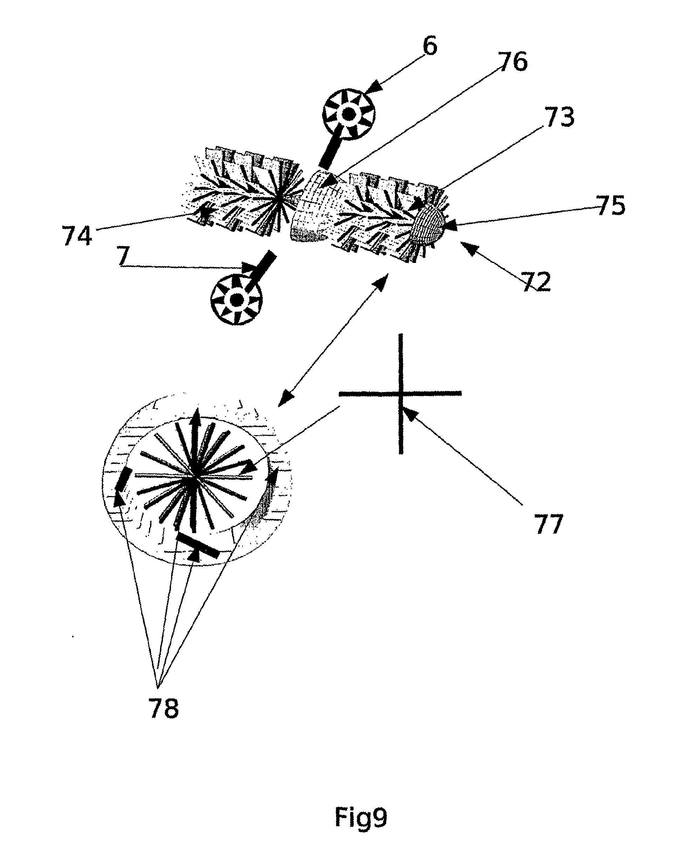

Dans un mode de réalisation particulier un rotor sera constitué de quatre aubes électriquement conductrices en contact avec l'axe des rotors, le reste des aubes étant électriquement isolé de l'axe du rotor ou en matériaux isolant (par exemple céramique isolante) Fig9.77. Les aubes conductrices sont disposées en croix par rapport à leur axe. La longueur des aubes est définie pour que celles-ci soient disposées à une distance comprise entre 1 micron et 5 mm de la paroi du tube du R_smo. Dans le plan de rotation du rotor sont disposées 4 électrodes à 90°c les unes des autres (de taille comprises par exemple e entre 50 microns et 1 centimètre). Dans certaine mode de réalisation les électrodes pourrons être des segment hélices Fig9.78. L'extrémité les aubes conductrices sont préférentiellement saillantes pour favoriser la formation d'un arc électrique entre l'électrode et l'aube. Chaque électrode est portée à la phase d'un générateur à haut voltage électrique alors que l'axe de rotation est connecté à la masse (un courant continu peut également être utilisé, l'axe des rotors et les électrodes seront branchés aux bornes du générateur).

Durant la rotation du rotor, les aubes conductrices sont amenées à proximité des électrodes (entre 50 microns et 1 centimètre) un arc électrique se forme entre les aubes et les électrodes. Puis les aubes s'éloignent des électrodes, l'arc s'étire alors entre les électrodes et les aubes conductrice, selon le chemin le plus cours en croisant ou barrant les aubes électriquement isolées ou neutres. Dans le cas de l'utilisation d 'électrode hélicoïdal, les arcs électriques pourront glisser le long de l'électrode. Dans certaines modes de réalisations, plusieurs étages de rotors et d'électrodes peuvent êtres ajoutés au système en disposant en quinconce les électrodes conductrices de chaque rotor afin de couvrir la plus grande section possible du tuyau du R_smo.

Le syngaz équilibré contenant le CO2 indésirable additionné d'une proportion souhaité de méthane (CH4) est alors introduit R_smo ou il est aspiré par la premier étage de compression du R_smo sous l'action des arc électriques et du méthane CH4, une grande partie du CO2 présent dans le syngaz est réduit par la réaction :

CO2 +CH4 -> 2CO +2H2 ΔH_{R}(600 K)= 205 KJ.mole⁻¹

De même une grande partie du H2O encore présent dans le syngaz est réduite par la réaction :

H2O +CH4 -> CO +3H2 ΔH_{R}(600 K)= 205 KJ.mole⁻¹

5.2-1 La consommation électrique du R_smo peut être diminuée en introduisant dans la première région des rotors au moins un étage de rotors contenant au moins un aimant fixe et une bobine de fil conducteur ou supraconducteur au niveau de la paroi du tuyau du réacteur. Les aimants fixes peuvent être des aubes électriquement isolées des rotors contenant des aubes conductrices. Dans un mode de réalisation préférentiel, les aimants sont intégrés à des rotors différents des rotors contenant des aubes conductrices. Les deux types de rotors peuvent être, soit intercalés, soit ségrégués dans deux parties différentes de la première région de rotors. Le nombre d'aubes magnétiques peut être quelconque, il sera toutefois nécessaire d'adapter le nombre et la disposition des aubes conductrices à la géométrie et la disposition des aubes magnétiques et à la géométrie et à la disposition des bobines électriques.

Dans un mode de réalisation particulier, le nombre d'aubes magnétiques sera égal à 2n aubes, avec n pair.

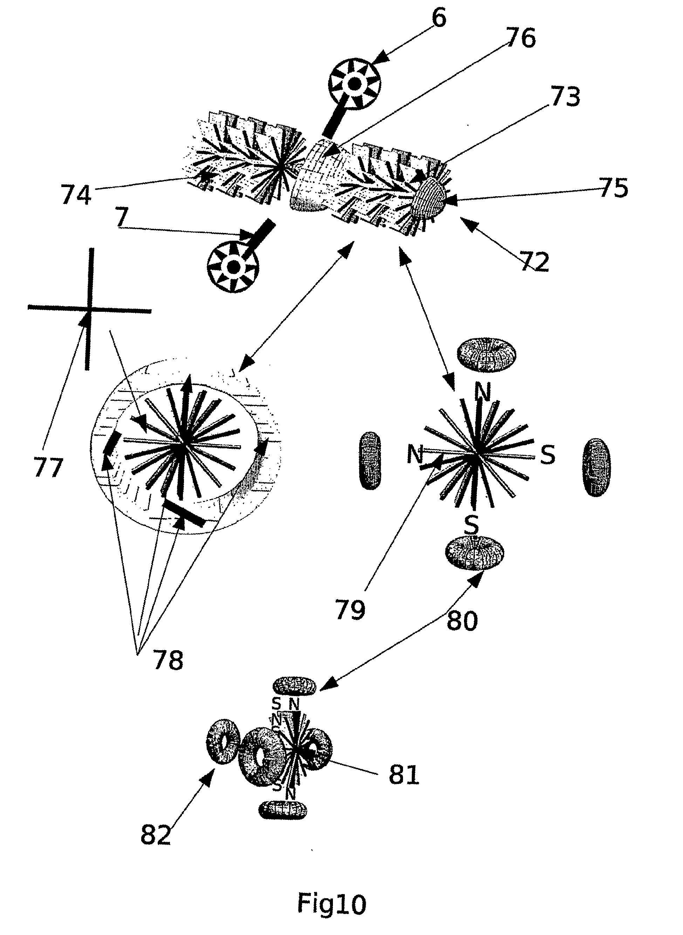

Dans un mode de réalisation particulier où n=2, les aubes magnétiques sont disposées en croix Fig10.79. Dans cette orientation, les aubes sont symétriques telles que deux aubes symétriques présentent une polarité opposée « N/S » . Les aubes magnétiques auront donc entre elles une distance angulaire de 90°. Des solénoïdes Fig10.80, par exemple au nombre de quatre, pourront être disposés perpendiculairement au plan de rotation du rotor contenant les aubes magnétiques. En tournant, le rotor fait varier le champ magnétique dans les solénoïdes, générant ainsi un courant électrique alternatif à la même fréquence de rotation que celle du rotor. En reliant une borne du solénoïde à l'une des électrodes du tuyau du R_smo et l'autre au rotor électriquement conducteur qui tourne dans le plan des électrodes, la rotation du rotor «magnétique » engendre le courrant électrique, nécessaire à la production des arcs électriques entre le rotor conducteur électrique et les électrodes du tuyau. Dans un mode de réalisation particulier, les quatre solénoïdes seront reliés par une de leurs bornes à un seul rotor. Ledit rotor sera isolé électriquement de l'axe, mais les aubes conductrices du rotor seront reliées entre elles. La seconde borne de chaque solénoïde sera reliée à une des électrodes dans le plan de rotation du rotor conducteur. L'orientation des solénoïdes, par rapport au plan de rotation du rotor contenant les aubes magnétiques, sera définie pour que les courants électriques induits dans les solénoïdes aient toujours le même sens dans les solénoïdes par rapport au rotor conducteur électrique. Les courants électriques de tous les solénoïdes reliés à un même rotor iront en même temps, soit des bobines vers le rotor, soit du rotor vert les bobines.

5.2-2 Dans un mode de réalisation particulier, dans une des configurations des aubes magnétiques symétriques décrite en 5.2-1, les solénoïdes sont reliés aux bornes d'un générateur de courant alternatif. Les deux solénoïdes opposés sont reliés de manière inversée au générateur, afin que les champs magnétiques induits soient symétriques par rapport à l'axe (de sens opposé entre eux). Le système solénoïde-rotor se comporte alors comme un moteur électrique en étoile actionnant l'étage de compression. L'étage de turbine pourra ainsi être supprimé, le moteur électrique assurant la compression des gaz.

Dans certains modes de réalisation, l'étage de compression peut être entraîné par un moteur électrique extérieur.

5.3 Dans un mode de réalisation particulier, les aubes magnétiques du rotor seront au nombre de 2n avec n impair. Les aubes magnétiques sont disposées régulièrement sur le rotor, selon un pas angulaire de 360/(2n). Les aubes magnétiques sont deux à deux symétriques selon l'axe de rotation, et deux aubes symétriques présentent une polarité opposée « N/S ». En parcourant la roue formée selon la répartition des aubes magnétiques sur le rotor, on obtient une alternance régulière de polarité magnétique Nord et Sud, qui respecte une symétrie axiale. Cette symétrie fait correspondre un pôle Nord à un pôle Sud par rapport à l'axe de rotation. Des aubes magnétiquement neutres peuvent être intercalées entre les aubes magnétiques pour obtenir le nombre d'aubes souhaitées dans le rotor. Ces aubes neutres pourront servir d'écran entre les champs magnétiques des aubes magnétiques. La rotation du rotor génère des variations de champs très rapides de l'ordre de 2n fois la vitesse de rotation du rotor. Ces champs magnétiques variant très rapidement en plus de produire un courant haute fréquence (2n fois la vitesse de rotation), peuvent échauffer très rapidement des molécules possédant un moment dipolaire tel que H2O, SiO... ou certains gaz comme l'hélium dans le même principe que l'ICP.

Toutefois, dans une configuration des solénoïdes perpendiculaires au plan de rotation du rotor à aubes magnétiques, les champs magnétiques induits dans les solénoïdes s'opposeront au champ magnétique fixe. L'intensité des champs magnétiques variant perpendiculairement au plan de rotation des rotors, subie par les gaz traversant le R_smo, est très faible.

5.4 Dans un procédé particulier, les solénoïdes du R_smo auront une géométrie en Z. Le solénoïde sera constitué d'un fil qui fait un demi-cercle dans un plan supérieur puis descend dans un plan inférieur selon une projection perpendiculaire. Dans le plan inférieur, le fil réalise un autre demi-cercle complémentaire puis remonte dans le plan supérieur selon une projection orthogonale. Un tour de solénoïde est donc constitué de deux demi-cercles dans deux plans parallèles superposés reliés par deux verticales. En vue de dessus un tour de solénoïde apparaît comme un cercle. L'opération est répétée un grand nombre de fois pour obtenir un solénoïde. La forme du cercle peut être remplacée par n'importe quelle forme géométrique carrée, ovale, rectangle ...

Le solénoïde en Z est placé autour du tuyau du R_smo, de telle sorte que les deux demi-cercles soient perpendiculaires (au-dessus et en-dessous) au plan de rotation du rotor à aubes aimantées et que les deux montants reliant les demi-cercles soient parallèles au plan de rotation du rotor. Les deux montants peuvent être dans le plan de rotation du rotor ou décalés par rapport à celui-ci. En tournant dans son plan de rotation, le rotor à aubes aimantées va produire un champ variable au travers des deux demi-cercles perpendiculaires du solénoïde. Ce champ variable va induire un courant électrique et un contre-champ magnétique induit opposé aux champs fixes des aubes. Le courant qui parcourt le circuit du solénoïde en passant dans la partie verticale créera un champ magnétique induit perpendiculaire aux autres champs magnétiques et au plan des rotors. Ce champ ne sera pas compensé et s'appliquera aux gaz traversant le R_smo.

En utilisant un rotor avec n impair et à polarité alternée, il est possible de faire varier le champ magnétique à une fréquence de plusieurs milliers de Hertz (2n fois la vitesse du rotor). Cette variation rapide des champs magnétiques induit un champ magnétique parallèle à l'axe des rotors qui permet d'échauffer très fortement les gaz pour les faire réagir. A des fréquences élevées (supérieures à 2 MHz), le champ magnétique induit peut générer des plasmas thermiques dans des gaz polaires tel que NH3, H2O, SiO ...

Toutefois, dans un champ variant couplé avec un système d'arcs électriques, des molécules neutres et non polaires telles que CO2 deviennent des dipôles qui peuvent être échauffées sous l'action de champs magnétiques variant ou de micro-ondes. Ce type de dispositif sera utilisé pour chauffer le CO2 sec.

5.6 Dans un mode de réalisation particulier, le rotor sera constitué de 2n aubes magnétiques. Des aubes neutres peuvent être intercalées entre les aubes magnétiques pour obtenir le nombre d'aubes souhaitées sur le rotor. Les aubes magnétiques sont disposées régulièrement sur le rotor, selon un pas angulaire de 360/(2n). Les aubes magnétiques sont deux à deux symétriques selon l'axe de rotation. Les deux aubes symétriques présentent une même polarité aux extrémités « N/N» ou « S/S» Fig10.81. Les parties centrales des aubes peuvent être recouvertes d'un matériau faisant écran aux champs magnétiques. Une alternative consiste à réaliser des aubes en matériaux composites dont seules les extrémités sont aimantées. Autour du rotor ainsi formé, un nombre pair de solénoïdes est disposé selon une symétrie centrale autour de l'axe du rotor. Préférentiellement le nombre de solénoïdes sera de 4 Fig10.80. Un autre solénoïde est disposé autour du tuyau de R_smo, dans un plan parallèle au plan de rotation du rotor magnétique, de préférence entre la première région de rotor et la chambre annulaire (Fig10.82). Une des bornes de chaque solénoïde perpendiculaire au rotor est connectée à une même borne du solénoïde parallèle au plan du rotor. La seconde borne du solénoïde parallèle est connectée au rotor conducteur électriquement. La seconde borne des solénoïdes perpendiculaires est connectée à une des électrodes de la paroi située dans le plan de rotation du rotor conducteur de courant. Dans certains modes de réalisation, le tuyau qui forme le R_mos est conducteur et remplace et joue directement le rôle d'électrode. Le circuit électrique est réalisé de manière à ce que tous les courants provenant des bobines perpendiculaires aillent vers la bobine parallèle en même temps et dans le même sens. En tournant, le rotor magnétique fait varier les champs magnétiques des bobines opposées de manière symétrique. Les champs magnétiques induits par les bobines perpendiculaires sont opposés deux à deux, ce qui limite les efforts de torsion sur la bobine. Le courant induit dans les quatre solénoïdes perpendiculaires passe dans la bobine parallèle et génère un champ magnétique variant à 2n fois la vitesse de rotation du rotor magnétique. Le fait que la bobine parallèle soit placée entre la première région de rotors et la chambre annulaire évite un trop grand échauffement des rotors. L'axe des rotors sera protégé par un déflecteur, évitant un trop grand échauffement.

5.7 Dans un mode de réalisation particulier le R_smo sera utilisé pour réduire le CO2 et oxyder le CH4 excédentaire produit durant la phase de gazéification et de synthèse FT, en CO et H2. Un mélange de CO2/CH4 ou éventuellement CO2 /CH4/H2O sera aspiré par la première région des rotors du R_smo. Le mélange pourra être enrichi par des particules de carbone (char, charbon) de 1 à 500 micromètres. Des particules de métaux, comme le manganèse, l'oxyde de manganèse, l'aluminium, le magnésium, l'indium, le titane, le fer, le cuivre... ou tout autre métal capable d'augmenter le taux de CO et H2 produit à partir du mélange de gaz, pourront être ajoutés au mélange.

Sous l'action des arcs électriques du premier étage, les molécules de gaz vont s'ioniser pour devenir des agents réactifs qui vont interagir entre eux et avec les particules de carbone selon les réactions précitées et r13 à r19.

Les métaux injectés sous forme de particules seront oxydés par le différent agent réactif formé; ils pourront être réduits sous l'action des plasmas (lumière et courant) et des courants induits par les micro-ondes dans la chambre annulaire.

En exemple, nous pouvons citer l'action du magnésium :

Mg +H2O -> MgO + H2 r13

Mg+CO2->MgO+CO r14

2Mg+CO2->2MgO+C r15

2MgO 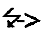 -> Mg +O2

2C+02-> CO r16

Ou de l'aluminium :

3 H2O + 2AL + → AL2O3- + 3H2 r17

3CO2 + AL + → AL2O3- + 3CO r18

3CO2 + 2AL + → 2AL2O3- + 2C r19

2AL2O3 -(e-)> 4AL 3O2

Le carbone produit peut être oxydé en CO par le CO2 ou l'eau, ou par des radicaux oxygène produits dans le réacteur.

5.8 Les poudres d'aluminium sont très inflammables et les poudres de magnésium le sont encore plus, ce qui les rend très difficiles à manipuler.

Pour pouvoir enrichir les gaz et les plasmas en métaux sans avoir à manipuler des poudres, un petit bloc du métal ou de l'alliage de métaux souhaités, de manière générale de tout matériau souhaité, est introduit en amont ou en aval de la première région des rotors. Le bloc est placé, soit contre la paroi du tuyau du R_mos, soit sur le déflecteur thermique au niveau de l'axe des rotors. En vis-à-vis du bloc est disposé un hublot en quartz ou de tout matériau transparent pour les longueurs d'ondes utilisées. A travers le hublot, un faisceau laser est focalisé sur le bloc avec une lentille ou un objectif de microscope. Le faisceau vient ablater la surface du bloc. La fréquence du laser sera comprise entre 1 à 10⁶ Hertz avec des impulsions de l'ordre de 1 femtosecondes à 100 nanosecondes. L'ablation laser du bloc de métallique pulvérisera à l'entrée du réacteur des gaz de matière expulsés du bloc qui traverseront le R_smo et pourront réagir avec les molécules de gaz tel que décrit en « 5.7 » . Pour des puissances de laser suffisantes (à partir de 8 microjoules/micron carré) et des impulsions suffisamment courtes de moins de 10 nanosecondes, des plasmas optiques se formeront. Ces plasmas ioniseront encore plus les gaz et les atomes de matière expulsés, rendant l'ensemble des éléments très réactifs, par la création d'entités chargées et/ou de radicaux libres. Toutes les longueurs d'onde peuvent convenir pour les ablations, il sera toutefois préféré des longueurs d'ondes dans les UV, par exemple à 266 nanomètres. L'énergie cinétique du gaz est maintenue élevée grâce aux variations rapides des champs magnétiques dans l'espace situé entre la première région de rotors et la chambre annulaire. Le gaz comprimé par l'action de la première région de rotor et de l'élévation de la température entre dans la chambre annulaire où les micro-ondes provenant des magnétrons augmentent la température.

5.9 Dans un mode de réalisation particulier, les métaux et particules utilisés pour enrichir les gaz sont conducteurs de courant. Sous l'action des micro-ondes dans la chambre annulaire, des courants électriques sont induits dans les particules en suspension dans le gaz. Ces courants induits provoqueront des arcs électriques entre particules ou avec les parois du réacteur R_smo, ce qui produit des plasmas d'origine électrique dans le gaz. Ces plasmas généreront les éléments activés qui en réagissant entre eux, avec le gaz, avec les particules de carbone ou de métal, produiront du CO et H2 par les réactions décrites plus haut. Les plasmas générés par les arcs électriques de courants induits sont de nature de plasma hors équilibre.

5.10 Dans un mode de réalisation particulier, la distance entre le fond de la chambre annulaire et le premier rotor de la deuxième région de rotor (région des turbines) sera égale à n* λ +φ avec n entier naturel, λ la longueur d'onde des micro-ondes et φ le déphasage induit par les réflexions sur la paroi ou le rotor. Ce premier rotor sera réalisé dans un matériau conduisant le courant électrique et réfléchissant les micro-ondes. Le diamètre du rotor sera par exemple égal à 0.5 λ. L'axe passant par les rotors sera réalisé dans un matériau composite, la plus grande partie sera réalisée dans un matériau isolant électrique. En revanche, la deuxième région de l'axe est réalisée, sur une longueur de λ/4 à partir du premier rotor dirigée vers la chambre annulaire, dans un matériau conducteur électrique ou recouverte d'un conducteur électrique. Les guides d'ondes du ou des magnétrons dirigeront les micro-ondes dans la chambre annulaire, qui seront réfléchies en partie vers le premier rotor de la deuxième région des rotors. Dans certains modes de réalisation, les ondes, en sortie des guides d'ondes, sont dirigées vers le premier rotor. Le rotor et la partie conductrice de l'axe vont se comporter comme une antenne à micro-ondes. Ceci aura pour effet de produire des courants induits dans le rotor et dans la partie de l'axe conductrice de courant. Ces courants induits provoqueront des arcs électriques entre l'antenne et :
- Les électrodes disposées à proximité du rotor antenne
- Les particules contenues dans le gaz et le gaz lui-même
- Les autres rotors éventuellement mis à la masse
- Les parois du R_smo

D'autre part, en raison de la distance entre la chambre annulaire et l'antenne, les micro-ondes pourront exciter suffisamment les particules de carbone et éventuellement de métal introduit dans le gaz, pour former un plasmoïde (ou un plasma). Il s'opérera alors une réduction du CO2 et une oxydation du carbone et du CH4 pour produire du CO et du H2. Lorsque le réacteur R_smo est en action, les gaz éventuellement enrichis en particules de carbone (et éventuellement d'autres éléments) sont aspirés par le premier étage de rotor. A ce niveau commence une activation des gaz sous l'effet des arcs électriques produits entre les aubes conductrices et les électrodes implantées dans la paroi du réacteur. Puis les gaz sont comprimés en amont de la chambre annulaire, et éventuellement chauffés par un champ magnétique variant parallèlement à l'axe des rotors et provenant de la rotation des aubes magnétiques et des solénoïdes. Les gaz passent alors dans la chambre annulaire où ils sont fortement échauffés sous l'action des micro-ondes pour former un plasma thermodynamique contenant des plasmas hors équilibre dus aux arcs électriques de courants induits. Les gaz échauffés et ionisés actionnent les rotors de la deuxième région des rotors qui entraîneront l'axe des rotors, ce qui entretient le fonctionnement du réacteur R_smo.

5.11 Dans un mode de réalisation, le R_mos est constitué d'un système de turbines et de compresseurs à deux étages. Un système de rotors formant un étage basse pression de compression, est relié par un axe de rotation, à un système de rotors formant un étage de turbines. Ces deux régions de rotors forment le système de rotors le plus externe du réacteur. Entre les étages de rotors externes, vient s'intercaler un étage de compression haute pression relié, par un axe creux, à un deuxième étage de turbines. Ces deux derniers étages forment le système de rotors le plus interne au réacteur. L'axe de rotation du système externe est emboîté dans l'axe du système interne. L'axe de rotation creux est évasé et replié, au centre du réacteur, pour former une chambre annulaire à micro-ondes solidaire de l'axe. L'axe interne ainsi que les rotors, sont réalisés dans un matériau conducteur électriquement et sont isolés du système de rotors le plus externe qui est connecté à la masse. Sous l'action des micro-ondes injectées dans la chambre annulaire, des courants électriques induits se produiront dans le système de rotors le plus interne. Ces courants génèrent des arcs électriques entre les deux systèmes de rotors et entre le système de rotors le plus interne et le tuyau du réacteur mis à la masse. Ces arcs électriques activeront les gaz et les particules traversant le réacteur de la manière décrite dans les chapitres précédents. Les divers modes de réalisation décrits pour le R_Smo peuvent être combinés dans de nombreuses variantes. Dans certains modes de réalisation, l'espace situé entre les deux rotors sera rempli d'huile ou d'un liquide permettant un couplage hyperboloïde entre les deux systèmes. Les axes seront par exemple munis d'ailettes (à l'intérieur de l'axe creux du système le plus interne et la surface du l'axe du système le plus externe) pour amplifier ce couplage. Dans certains modes de réalisation, l'étage de turbine du système le plus externe est supprimé. Le système de compression basse pression est couplé avec le reste du système de rotors (correspondant au système de rotor interne) par l'emboîtement des axes .

Dans certains modes de réalisation, le compresseur du système le plus interne est constitué par un compresseur centrifuge dont le dos de la partie cannelé (cône muni d'ailettes ou de sillons : impulseur) est fusionné à la chambre annulaire.

5.12 D'une manière générale, un R_smo est utilisé comme réacteur complémentaire ou principal de gazéification du carbone pour l'oxyder en CO et produire du H2. Dans ces conditions, des étapes de filtrage, de bullage, de diffusion différentielle à travers des membranes, de séparation par cyclone, de séparation par cryogénie, ou tout autre procédé de séparation et de purification, sont réalisables afin de purifier le syngaz obtenu et d'éliminer les particules et les métaux contenus dans le syngaz.

5.13-1 Dans un mode de réalisation particulier, la gazéification réalisée dans un R_smo ( éventuellement un Tb_smo) se fait à partir de vapeur de SiO.

Du CO2 gaz est chauffé par exemple dans un réacteur R_smo à une température comprise entre 500°C et 2000°C. Le CO2 n'étant pas polaire, du H2O est éventuellement ajouté au CO2 pour obtenir un mélange de gaz de chauffage plus efficace.

Le gaz ou le mélange de gaz est mis en contact avec un mélange de particules de Si (silice) et de Si02 (silicium). Les particules de Si et de Si02 seront de taille comprise entre 1 nanomètre à 5 millimètres. La taille des particules sera, soit homogène, soit inhomogène selon le mode de réalisation du procédé.

Sous l'action de la chaleur et du gaz, il se produit les réactions suivantes dans des proportions variées :

Si + Si02 <-> 2SiO gaz

CO₂ + Si <-> SiO gaz +CO

CO₂ + Si <-> SiC + O₂ minoritaire

Si+ O₂ ->SiO₂

Le mélange de gaz obtenu est éventuellement surchauffé dans un deuxième R_smo, à une température comprise entre 500°C et 2000°C. Le SiO ayant un moment dipolaire voisin de 1,54D, sera fortement échauffé par les micro-ondes.

Puis le mélange gazeux est mis en contact avec des particules de carbone d'une taille homogène ou inhomogène comprise entre 1 nanomètre et 2 centimètres, selon le mode de mise en oeuvre du procédé.

Sous l'action du mélange de gaz, il se produit la réaction :

2C +SiO gaz <-> SiC solide +CO gaz r20

Cette dernière réaction peut être réalisée dans un Tb_smo ou un R_smo couplés à un cyclone permettant d'isoler les particules du mélange de gaz CO2/CO obtenu.

5.13-2 Dans un procédé alternatif, le gaz de chauffage utilisé sera le méthane CH4 à la place du CO2. Le gaz sera chauffé par exemple dans un R_smo (éventuellement un Tb_smo) à une température comprise entre 500°C et 2000°C. Le CH4 étant très peu polaire, il sera éventuellement mélangé à une faible proportion de H2O.

Les réactions suivantes se produiront dans des proportions variées.

CH₄-> Csolide +2H₂

2CH₄ -> C₂H₂ +H₂

H₂O +CH₄ -> CO +3H₂

Le mélange de gaz en sortie du R_smo est mis en contact avec un mélange de particules de Si (silice) et de Si02 (silicium) selon le procédé décrit en 5.13-1. Il se produit les réactions suivantes :

Si + Si02 <-> 2SiO gaz

2H₂O + 2Si -> 2SiO₂ +2H₂

Si +CH₄ <-> SiC +2H₂ minoritaire

Si +C -> SiC minoritaire

Si02 +3C -> SiC +2 CO

Si02 + 3CH₄ -> SiC + 2CO +6H₂

Puis le mélange gazeux est mis en contact avec des particules de carbone selon le procédé décrit en 5.13-1, il se produit alors la réaction r20.

5.13-3 Dans un procédé alternatif, le gaz de chauffage utilisé sera H2O, qui sera chauffé dans R_smo (éventuellement un Tb_smo) à une température comprise entre 500°C et 2000°C. Le mélange gazeux est alors mis en contact avec un mélange de particules de Si et de Si02 selon le procédé décrit en 5.13-1.

Sous l'action de la chaleur et du gaz, il se produit les réactions :

Si + SiO₂ <-> 2SiO gaz

2H₂O + 2Si → 2SiO₂ +2H₂

Dans certaines conditions, le Si02 sera produit au cours de la réaction à partir de la silice Si seule.

Puis le mélange gazeux est mis en contact avec des particules de carbone selon le procédé décrit en 5.13-1, il se produit la réaction r20.

Les syngaz obtenus (H2, CO, C2H2, CO2) ou (CO, CO2) pourront être purifiés et équilibrés par ajout de vapeur d'eau.

Le C2H2 a un coefficient de solubilisation dans l'eau (76.7 10⁻³ moles/litre a 0°C et 1.013 bar), voisin de celui du CO2, il pourra donc être séparé du reste des molécules selon le procédé décrit en 4.2.

Le SiC produit durant les différentes réactions de gazéification sera utilisé comme catalyseur de la réaction FT.

6.1 A la sortie des R_smo les gaz sont refroidis dans des échangeurs thermiques, purifiés pour éliminer les particules et le CO2 résiduel. Le syngaz est équilibré, porté à la température souhaitée par un Tb_smo ou un autre moyen avant d'être injecté dans un réacteur de FT.

6.1 En sortie du réacteur FT, le mélange d'hydrocarbures et d'alcools est chauffé dans un F_smo.

Dans un mode de réalisation particulier, pour obtenir une meilleure action des micro-ondes, une certaine quantité de vapeur d'eau est introduite dans le mélange d'hydrocarbures et d'alcools sortant du réacteur FT. Le mélange peut également être chauffé par de la chaleur provenant des échangeurs thermiques. Le mélange d'hydrocarbures et d'alcools en sortie de F_smo atteint une température comprise entre 200°C et 600°C (préférentiellement 370°C), suffisante pour une distillation dans une colonne de distillation.

Dans certains modes de réalisation, des miroirs plans, sphériques, ou avec une organisation Fresnel, réfléchiront le rayonnement solaire sur la colonne de distillation.

Dans certains modes de réalisation, des lentilles optiques font converger le rayonnement solaire sur la surface du tuyau du F_smo ou dans le F_smo lui-même au travers d'un hublot transparent, pour chauffer le mélange d'hydrocarbures et d'alcools.

6.2 Le méthane obtenu en fin de distillation sera utilisable, comme combustible dans le réacteur cyclonique de gazéification, et dans les différents réacteurs et réactions décrits précédemment.

Toutefois, une partie du méthane produit par la synthèse de FT pourra servir de carburant à des moteurs à combustion interne actionnant un alternateur afin de produire une partie du courant utilisé. Le CO2 produit par les moteurs sera injecté dans le circuit de CO2 du système de production du syngaz. La chaleur produite par les moteurs sera également récupérée au profit du système de production.

6.3 Dans certains modes de réalisation, le CO2 sous pression sera produit par la combustion du méthane dans une turbine à gaz couplée à un générateur de courant ou un turbo-générateur. En sortie de la turbine, après un éventuellement passage dans un Tb_smo pour être surchauffé, le CO2 ira alimenter les cyclones du gazéificateur, le réacteur à plasma, les R_mos ou tout autre réacteur du système de production.

6.4 Une patrie de l'énergie électrique sera apportée par des panneaux solaires. Les panneaux solaires présenteront à leur surface des particules de quartz, particules quantiques (quantique ou Qdot ). Ces particules ont la capacité d'émettre une fluorescence dans l'infrarouge et dans le visible sous l'action des UV. Cette transformation de la lumière UV en spectre visible et IR la rend utilisable par des panneaux classiques.

D'une manière générale, les Qdot pourront être intégrés au revêtement noir des tuyaux des réacteurs pour augmenter leur capacité à absorber la lumière.

Une autre partie de l'énergie électrique nécessaire pour faire fonctionner l'installation proviendra d'énergie éolienne.

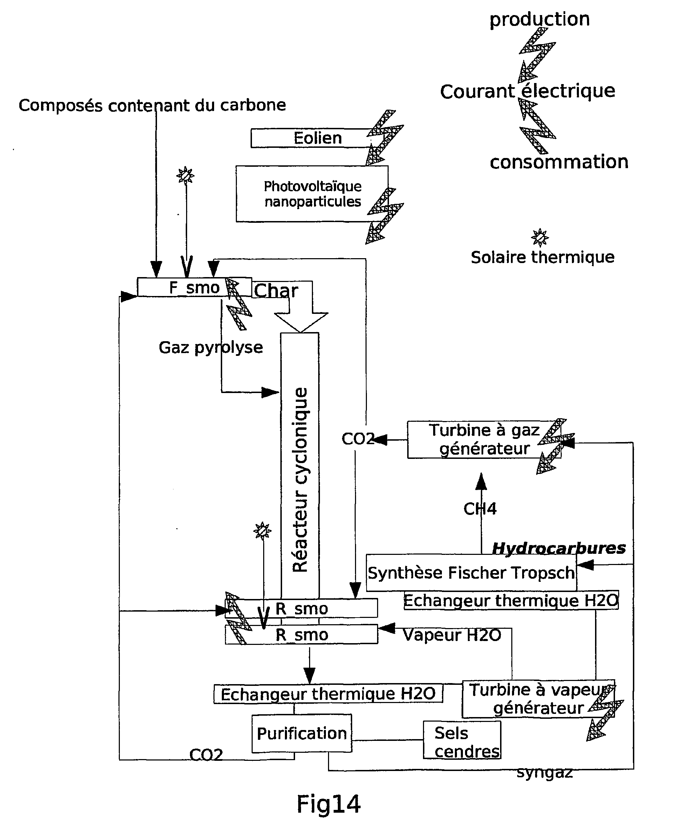

De manière générale, tout type de production de courant électrique peut convenir pour assurer les besoins en énergie électrique du procédé Fig14. Il sera toutefois préféré une production de courant électrique non polluante incluant le système de pile à combustible, pour ne pas alourdir la balance de pollution du système.

### LEGENDES DE L'ENSEMBLE DES FIGURES

1) Tuyau du four solaire/micro-ondes
1a) Paroi du four solaire
1b) Vide ou gaz isolant (argon par exemple)
1c) Paroi transparente de l'enceinte de confinement
1d) Particules quantiques sur la paroi de l'enceinte de confinement, transformant le rayonnement solaire UV en un rayonnement visible et infrarouge capable de traverser la paroi
2) Vis sans fin
3) Système de miroirs
3a) Miroir à l'intérieur de l'enceinte de confinement
4) Miroirs suivant en escalier une section d'ellipsoïde
5) Lentilles convergentes ou de Fresnel
6) Magnétron
7) Guide d'ondes
8) Cheminées de dégazage
9) Coeur du réacteur (LFLC)
10) Chambre de combustion
11) Brûleurs, tangents à la paroi de la chambre de combustion
12) Gaz de combustion tournoyant sous l'action des flammes de combustion
13) Flammes de combustion
14) Arrivée d'air
15) Arrivée des gaz de pyrolyse des granules
16) Arrivée de gaz additionnels tels que CH4
17) Jupe formant un cône percé dirigé vers le bas : sortie axiale de la chambre de combustion des granules et des gaz, et entrée axiale dans le premier cyclone
18) Jupe formant un cône percé dirigé vers le bas : sortie axiale des granules et des gaz du premier cyclone et entrée axiale dans le deuxième cyclone
19) Jupe formant un cône percé dirigé vers le bas : sortie axiale des granules du deuxième cyclone
20) Cône d'obturation des ouvertures en entonnoir des jupes. Le cône est muni d'ailettes pour créer des passages obliques vers le cyclone inférieur afin de faire tourner les gaz dans le sens de rotation du vortex du cyclone.
21) Obstruction partielle de l'ouverture en entonnoir des jupes. Une série de conduits disposés entre le bord de la jupe et la structure en cône forme les passages entre les deux compartiments
22) Conduit oblique entre le bord de la jupe et le cône d'obturation partielle de l'ouverture en entonnoir de la jupe.
23) Bord de l'ouverture en entonnoir de la jupe.
24) Ailettes créant des passages obliques vers le cyclone inférieur.
25) Vues d'un cône d'obturation des ouvertures des jupes : section et vue du dessous
26) Ailettes de la face inférieure d'un cône d'obturation des ouvertures des jupes
27) Tuyau d'injection tangentielle des gaz dans les cyclones
27a) Arrivée de produit abrasif dans le tuyau d'injection tangentiel des gaz dans les cyclones
28) Cyclone à double entrée axiale et tangentielle
29) Guide du flux des gaz remontants
30) Structure creuse en T
31) Pied de la structure creuse en T : tuyau de remontée des flux
32) Tuyère de sortie des gaz (tuyère horizontale): sortie du flux remontant dans l'espace inter-tuyaux
33) Tuyau interne du coeur du réacteur
34) ) Tuyau externe du coeur du réacteur
35) Espace inter-tuyaux
36) Conduit oblique de l'entrée axiale dans le cyclone
37) Extrémité inférieure du tuyau interne du coeur: jupe présentant une courbure en obus
38) Obturateur partiel de l'extrémité inférieure du tuyau interne : bi-cône
39) Grillage avec pores calibrés
40) Grillage organisé en cône remontant vers le tuyau interne
41) Bi-cône fermant le cône grillagé
42) Panier annulaire creux en son centre (lumière)
43) Lumière du panier annulaire
44) Axe de rotation du panier annulaire
45) Hélice de fixation du panier à l'axe de rotation
46) Conduits organisés autour d'un court cylindre grillagé formé de tiges métalliques verticales
47) Tiges métalliques verticales permettant la formation du flux remontant dans le cyclone, la filtration des granules, la génération des arcs électriques de courants induits
48) Ailette structurante des conduits obliques
49) Conduit oblique imprimant un mouvement de rotation aux gaz chargés de particules
50) A : Cylindre de remontée des flux et B : cône percé de remontée des flux
51) Ailette disposée sur le bord externe du panier annulaire et dirigée vers l'intérieur du panier
52) Electrode hélicoïdale en ressort accolé à une électrode couronne
53) Base de l'électrode en ressort se terminant par une structure en couronne en refermant la dernière spire sur elle-même
54) Extrémité de l'électrode en ressort incurvé pour repasser au milieu de la spirale du ressort, de manière à former un axe central
55) Cyclone avec électrode hélicoïdale : GlidArc
56) Structure en étoile reliant les axes des cyclones GlidArc permettant ainsi d'actionner en même temps les ressorts
57) Cyclone GlidArc disposé en rosette autour de la lumière de la jupe du dernier cyclone terminant le tuyau interne du LFLC_dc.
58) Couvercle de fermeture des cyclones. A : vue de côté, B : vue de dessous.
59) Cylindre de sortie des flux remontant dans le cyclone GlidArc
60) Fente oblique d'alimentation axiale du cyclone GlidArc
61) Ailette oblique encadrant les fentes d'alimentation axiale des cyclones 63) Conduit d'alimentation axiale des cyclones GlidArc à partir des conduits de sortie du cyclone de l'étage supérieur
64) Tuyau d'alimentation tangentielle du cyclone GlidArc, le tuyau s'ouvre dans l'espace inter-tuyaux en faisant face au vortex du tuyau externe à proximité de sa paroi
65) Tuyau de guidage des flux remontants
66) Ailettes disposées entre le tuyau externe et le guide de flux
67) Fond de la chambre de combustion
68) Grille d'obstruction du fond du réacteur de gazéification
69) Structure hémi-cônique
70) Réservoir à cendres du gazéificateur
71) Cyclone de séparation gaz / particules
72) Parois du Tb_omo
73) Région de rotors, située sur le premier tiers de l'axe compresseur
74) Région de rotors, située sur le troisième tiers de l'axe
75) Axe de rotor ovoïdal
76) Chambre annulaire pour le confinement des micro-ondes
77) Rotor constitué de quatre aubes électriquement conductrices en contact avec l'axe, les aubes restantes sont électriquement isolées de l'axe
78) 4 électrodes à 90° les unes des autres, perpendiculaires au plan de rotation du rotor
79) Les aubes magnétiques sont disposées en croix, deux aubes symétriques présentent une polarité opposée « N/S »
80) 4 solénoïdes disposés perpendiculairement au plan de rotation du rotor contenant les aubes magnétiques
81) Rotor avec aubes magnétiques présentant une symétrie centrale, deux aubes symétriques présentent la même polarité aux extrémités « N/N » ou « S/S »
82) Solénoïde disposé parallèlement au plan de rotation du rotor contenant les aubes magnétiques
83) Four solaire en peigne
84) Unité micro-ondes raccordant plusieurs fours solaires
85) Corps poreux
86) Chargement du substrat
87) Brûleurs tangents à la paroi de la chambre de combustion
88) Puits d'aspiration
89) Cône inversé fermant le dernier cyclone du tuyau intérieur
90) Source à ultrasons
91) Guide à ultrasons
92) Hélice mise à la masse
93) Jeux de quatre électrodes connectées à un générateur électrique
94) Isolant électrique isolant les pales de l'hélice des électrodes 93
95) Couteaux
96) Hélice
97) Bouclier thermique
98) Chambre de collection
99) axe couteaux hélice

## Revendications

1. Procédé de gazéification de composés contenant du carbone pour la production d'un syngaz, composé principalement de CO et H2, **caractérisé en ce qu'**il comprend :
A) une première étape de pyrolyse torréfaction des composés, en char et gaz de pyrolyse, dans un réacteur solaire micro-ondes, provoquée par un échauffement des composés contenus dans ledit réacteur solaire micro-ondes grâce à une énergie thermique synergique apportée conjointement d'une part, par l'échauffement des parois du réacteur grâce à la concentration par convergence ou réflexion d'un rayonnement solaire à la surface desdites parois, et d'autre part, par des micro-ondes injectées directement à l'intérieur du réacteur et des composés, et
B) une deuxième étape de transformation du char et des gaz de pyrolyse, provenant du réacteur solaire micro-ondes, principalement en CO et H2, par des réactions chimiques d'oxydoréduction se produisant dans un réacteur cyclonique, ledit réacteur cyclonique permettant la formation de vortex gazeux entraînant et oxydant les particules de char, grâce à la combustion des gaz de pyrolyse ou de gaz additionnel, à l'injection dans le réacteur cyclonique de gaz ou de mélange de gaz échauffés, à un échauffement des gaz présents directement dans ledit réacteur sous l'action de micro-ondes injectées directement dans le réacteur cyclonique.

2. Procédé selon la revendication 1 **caractérisé en ce que** les gaz utilisés pour réaliser les réactions d'oxydoréduction, sont chauffés, accélérés et mis sous pression sous l'action synergique d'une énergie thermique provenant de l'échauffement des parois d'un réacteur de chauffage de mise sous pression et d'accélération, par convergence et/ou réflexion d'un rayonnement solaire à la surface des parois dudit réacteur, et par des micro-ondes injectées à l'intérieur dudit réacteur.

3. Procédé selon l'une quelconque des revendications 1 à 2, **caractérisé en ce que** le réacteur cyclonique et/ou les réacteurs de chauffage de mise sous pression et d'accélération comprennent des moyens pour produire des plasmas gazeux et/ou des plasmas ou plasmons mixtes gaz/particules.

4. Procédé selon l'une quelconque des revendications 1 à 3, **caractérisé en ce que** les micro-ondes sont utilisées en même temps qu'un rayonnement infrarouge préférentiellement à des fréquences correspondant aux fréquences d'absorption des modes de vibration asymétrique des molécules de CO2.

5. Procédé selon l'une quelconque des revendications 1 à 4, **caractérisé en ce qu'**un substrat de gazéification comprenne des particules hétérogènes comportant des particules des composés contenant du carbone, et des particules additives favorisant la gazéification éventuellement agglomérées ou fusionnées avec les particules des composés contenant du carbone.

6. Procédé selon la revendication 5 **caractérisé en ce que** les particules additives comprennent d'une part, des métaux réducteurs qui favorisent la gazéification par des réactions d'oxydoréduction et la production d'éléments chargés et de radicaux libres sous l'action d'arcs électriques produits par des courants induits dans les particules, et d'autre part, des particules de silice et/ou de silicium produisant du SiO capable de fixer une partie du carbone contenu dans les composés sous forme de SiC.

7. Dispositif pour la mise en oeuvre du procédé selon l'une des revendications précédentes, **caractérisé en ce qu'**il comprend un réacteur solaire micro-ondes de pyrolyse torréfaction et un réacteur cyclonique, le réacteur solaire micro-ondes de pyrolyse torréfaction comportant un tuyau (1), par exemple en matériau réfractaire, des moyens pour faire progresser les composés à l'intérieur du tuyau du réacteur solaire micro-ondes de pyrolyse torréfaction (2), des moyens pour concentrer et faire converger un rayonnement solaire à la surface du tuyau du réacteur (3-3a-4-5), des moyens pour isoler le tuyau du réacteur du milieu extérieur (Fig1.1c), des moyens pour améliorer l'inertie thermique du tuyau du réacteur, des moyens pour produire des micro-ondes, des moyens pour guider les micro-ondes, et le réacteur cyclonique comprenant au moins deux unités cycloniques superposées ou emboîtées communiquant entre elles, des dispositifs permettant des combustions qui induisent des vortex gazeux dans les unités et/ou des dispositifs d'injection latéraux ou tangentiels de gaz dans les unités, induisant des vortex gazeux, des moyens pour produire des micro-ondes, des moyens pour guider les micro-ondes.

8. Dispositif selon la revendication 7 **caractérisé en ce qu'**il comprend entre autres un réacteur de chauffage de mise sous pression et d'accélération des gaz d'oxydation comportant un tuyau, par exemple en matériau réfractaire, des moyens pour concentrer et faire converger un rayonnement solaire à la surface du tuyau du réacteur, des moyens pour isoler le tuyau du milieu extérieur, des moyens pour améliorer l'inertie thermique du tuyau du réacteur, des moyens pour faire progresser les gaz et éventuellement les particules le long du tuyau du réacteur en les compressant, en les chauffant et en les accélérant.

9. Dispositif selon la revendication 8 **caractérisé en ce que** le réacteur de chauffage de mise sous pression et d'accélération des gaz d'oxydation comprend entre autres, des rotors à aubes, des compresseurs centrifuges et/ou à aubes, des turbines, au moins une chambre annulaire, au moins une source de micro-ondes éventuellement complétée par une source d'infrarouges pour faire progresser, compresser, chauffer et accélérer des gaz.

10. Dispositif selon l'une quelconque des revendications 6 à 9, **caractérisé en ce qu'**il comprend des dispositifs de courants électriques induits ou non, d'optique, de micro-ondes pour produire des plasmas gazeux et/ou des plasmons mixtes gaz/particules.

11. Dispositif selon l'une quelconque des revendications 6 à 10, **caractérisé en ce qu'**il comprend au moins un magnétron et au moins un guide d'ondes pour produire des micro-ondes de fréquence comprise entre 1 GigaHertz et 300 GigaHertz et pour guider lesdites micro-ondes.

## Claims

1. Process of gasification of carbon-containing compounds in order to produce a syngas containing primarily CO and H2, **characterized in that** it includes:
A) a first step of torrefaction pyrolysis of the compounds, into char and pyrolysis gas, in a solar microwave reactor, caused by heating the compounds contained in said solar microwave reactor by synergistic thermal energy provided jointly by the heating of the walls of the reactor owing to the concentration by convergence or reflection of solar radiation at the surface of said walls, and by microwaves injected directly into the reactor and compounds, and
B) a second step of converting the char and pyrolysis gas, coming from the solar microwave reactor, primarily into CO and H2, by chemical oxidation-reduction reactions occurring in a cyclone reactor, in which said cyclone reactor enables the formation of a gaseous vortex driving and oxidizing the char particles, owing to the combustion of the pyrolysis gases or additional gas, the injection of heated gas or gas mixtures into the cyclone reactor, and the direct heating of the gases present in said reactor by microwaves injected directly into the cyclone reactor.

2. Process according to claim 1, **characterized in that** the gases used to produce the oxidation-reduction reactions are heated, accelerated and pressurized under the synergistic action of thermal energy resulting from the heating of the walls of a pressurization and acceleration heating reactor, by convergence and/or reflection of solar radiation at the surface of the walls of said reactor, and by microwaves injected into said reactor.

3. Process according to either one of claims 1 or 2, **characterized in that** the cyclone reactors and/or the pressurization and acceleration heating reactors include means for producing gaseous plasmas and mixed gas/particle plasmas or plasmons.

4. Process according to any one of claims 1 to 3, **characterized in that** microwaves are used at the same time as infrared radiation, preferably at frequencies corresponding to the absorption frequencies of the modes of asymmetric vibration of CO2 molecules.

5. Process according to any one of claims 1 to 4, **characterized in that** a gasification substrate includes heterogeneous particles comprising particles of compounds containing carbon, and additive particles promoting gasification, optionally agglomerated or mixed with the particles of the carbon-containing compounds.

6. Process according to claim 5, **characterized in that** the additive particles include reduction metals that promote gasification by oxidation-reduction reactions and the production of charged elements and free radicals by electric arcs produced by currents created in the particles, and also silica and/or silicon particles producing SiO capable of binding a portion of the carbon contained in the compounds in the form of SiC.

7. Device for implementing the process according to one of the previous claims, **characterized in that** it includes a solar microwave torrefaction pyrolysis reactor and a cyclone reactor, in which the solar microwave torrefaction pyrolysis reactor comprises a pipe (1), for example made of a refractory material, means for moving the compounds inside the pipe of the solar microwave torrefaction pyrolysis reactor (2), means for concentrating and causing convergence of solar radiation at the surface of the pipe of the reactor (3-3a-4-5), means for insulating the pipe of the reactor from the external environment (figure 1.1c), means for improving the thermal inertia of the pipe of the reactor, means for producing microwaves, and means for guiding microwaves, and in which the cyclone reactor comprises at least two cyclone units superimposed or nested and communicating with one another, devices enabling combustion creating gas vortices in the units, devices for lateral or tangential injection of gas into the units, creating gas vortices, means for producing microwaves and means for guiding microwaves.

8. Device according to claim 7, **characterized in that** it includes, *inter alia,* an oxidation gas pressurization and acceleration heating reactor comprising a pipe, for example made of a refractory material, means for concentrating and causing convergence of solar radiation at the surface of the pipe of the reactor, means for insulating the pipe of the reactor from the external environment means for improving the thermal inertia of the pipe of the reactor, means for moving the gases as optionally the particles along the pipe of the reactor, by compressing them, heating them and accelerating them.

9. Device according to claim 8, **characterized in that** the oxidation gas pressurization and acceleration heating reactor includes, *inter alia,* blade rotors, centrifugal and/or blade compressors, turbines, at least one annular chamber, and at least one microwave source optionally complemented by an infrared source so as to move, compress, heat and accelerate the gases.

10. Device according to any one of claims 6 to 9, **characterized in that** it includes induced or non-induced electric current, optical and microwave devices for producing gaseous plasmas and/or mixed gas/particle plasmons.

11. Device according to any one of claims 6 to 10, **characterized in that** it includes at least one magnetron and at least one waveguide for producing microwaves between 1 GHz and 300 GHz and guiding said microwaves.

## Patentansprüche

1. Verfahren zur Vergasung von kohlenstoffhaltigen Verbindungen zur Herstellung von Synthesegas, das hauptsächlich aus CO und H₂ zusammengesetzt ist, **dadurch gekennzeichnet, dass** es umfasst:
A) einen ersten Schritt zur Torrefikationspyrolyse der Verbindungen zu Kohle und Pyrolysegas in einem Solar-Mikrowellenreaktor, die durch ein Erwärmen der in dem Solar-Mikrowellenreaktor enthaltenen Verbindungen aufgrund einer synergistischen Wärmeenergie bewirkt wird, die einerseits durch das Erwärmen der Reaktorwände aufgrund der Konzentration einer Sonneneinstrahlung durch Konvergenz oder Reflexion auf die Oberfläche der Wände und andererseits durch direkt in das Innere des Reaktors und die Verbindungen eingeführte Mikrowellen gemeinsam zugeführt wird, und
B) einen zweiten Schritt zur Umwandlung von Kohle und Pyrolysegasen, die aus dem Solar-Mikrowellenreaktor stammen, hauptsächlich in CO und H₂, durch chemische Redox-Reaktionen, die in einem Zyklonreaktor ablaufen, wobei der Zyklonreaktor die Bildung von Gaswirbelströmen ermöglicht, die Kohlepartikel mitführen und oxidieren, aufgrund der Verbrennung der Pyrolysegase und zusätzlicher Gase, bei Einführung von erwärmten Gasen oder Gasgemischen in den Zyklonreaktor, einer Erwärmung der im Reaktor direkt vorhandenen Gase unter Einwirkung von Mikrowellen, die direkt in den Zyklonreaktor eingeführt werden.

2. Verfahren nach Anspruch 1, **dadurch gekennzeichnet, dass** die zur Durchführung der Redox-Reaktionen verwendeten Gase unter der synergistischen Wirkung einer Wärmeenergie, die von der Erwärmung der Wände eines Heizreaktors zur Druckbeaufschlagung und Beschleunigung durch Konvergenz und/oder Reflexion einer Sonneneinstrahlung auf die Oberflächen der Wände des Reaktors und durch ins Innere des Reaktors eingeführte Mikrowellen gebildet ist, erwärmt, beschleunigt und unter Druck gesetzt werden.

3. Verfahren nach einem der Ansprüche 1 bis 2, **dadurch gekennzeichnet, dass** der Zyklonreaktor und/oder die Heizreaktoren zur Druckbeaufschlagung und Beschleunigung Mittel zum Erzeugen von Gasplasmen und/oder Plasmen oder Plasmonen von gemischten Gasen/Partikeln umfassen.

4. Verfahren nach einem der Ansprüche 1 bis 3, **dadurch gekennzeichnet, dass** die Mikrowellen gleichzeitig mit einer Infrarotstrahlung, bevorzugt bei Frequenzen, die den Absorptionsfrequenzen der asymmetrischen Schwingungsmoden von CO₂-Molekül zugeordnet sind, verwendet werden.

5. Verfahren nach einem der Ansprüche 1 bis 4, **dadurch gekennzeichnet, dass** ein Substrat zur Vergasung heterogene Partikel umfasst, die Partikel von kohlenstoffhaltigen Verbindungen und zusätzliche Partikel beinhalten, die die Vergasung begünstigen, eventuell agglomeriert oder fusioniert mit Partikeln von kohlenstoffhaltigen Verbindungen.

6. Verfahren nach Anspruch 5, **dadurch gekennzeichnet, dass** die zusätzlichen Partikel einerseits Reduktionsmetalle, die die Vergasung durch Redox-Reaktionen und die Bildung von geladenen Elementen und freien Radikalen unter der Wirkung von elektrischen Bogen begünstigen, die von in den Partikeln induzierten Strömen erzeugt sind, und andererseits Siliciumoxid- und/oder Siliciumpartikel umfassen, die SiO bilden, das einen Teil des in den Verbindungen enthaltenen Kohlenstoffs in Form von SiC fixieren kann.

7. Vorrichtung zum Durchführen des Verfahrens nach einem der vorhergehenden Ansprüche, **dadurch gekennzeichnet, dass** sie umfasst:
einen Solar-Mikrowellenreaktor zur Torrefikationspyrolyse und einen Zyklonreaktor, wobei der Solar-Mikrowellenreaktor zur Torrefikationspyrolyse eine Leitung (1), beispielsweise aus einem hitzebeständigen Material, Mittel zum Vorschub der Verbindungen im Inneren der Leitung des Solar-Mikrowellenreaktors zur Torrefikationspyrolyse (2), Mittel zum Konzentrieren und Konvergieren einer Sonneneinstrahlung auf die Oberfläche der Leitung des Reaktors (3-3a-4-5), Mittel zum Isolieren der Leitung des Reaktors von der äußeren Umgebung (Fig. 1.1c), Mittel zum Verbessern der thermischen Trägheit der Leitung des Reaktors, Mittel zum Erzeugen von Mikrowellen, Mittel zum Leiten der Mikrowellen aufweist, und wobei der Zyklonreaktor umfasst: mindestens zwei Zykloneinheiten, die übereinander angeordnet und so eingesetzt sind, dass sie miteinander in Verbindung stehen, Vorrichtungen, die Verbrennungen ermöglichen, die Gaswirbelströme in den Einheiten auslösen und/oder Vorrichtungen zum seitlichen oder tangentialen Einführen von Gas in die Einheiten, wobei Gaswirbelströme ausgelöst werden, Mittel zum Erzeugen von Mikrowellen, Mittel zum Leiten der Mikrowellen.

8. Vorrichtung nach Anspruch 7, **dadurch gekennzeichnet, dass** sie unter anderem umfasst:
einen Heizreaktor zur Druckbeaufschlagung und Beschleunigung von Oxidationsgasen, der eine Leitung aufweist, beispielsweise aus einem hitzebeständigen Material, Mittel zum Konzentrieren und Konvergieren einer Sonneneinstrahlung auf die Oberfläche der Leitung des Reaktors, Mittel zum Isolieren der Leitung von der äußeren Umgebung, Mittel zum Verbessern der thermischen Trägheit der Leitung des Reaktors, Mittel zum Vorschub der Gase und eventuell der Partikel entlang der Leitung des Reaktors, wobei sie komprimiert, erwärmt und beschleunigt werden.

9. Vorrichtung nach Anspruch 8, **dadurch gekennzeichnet, dass** der Heizreaktor zur Druckbeaufschlagung und Beschleunigung von Oxidationsgasen unter anderem umfasst:
Schaufelräder, Zentrifugalkompressoren und/oder Schaufelkompressoren, Turbinen, mindestens eine ringförmige Kammer, mindestens eine Mikrowellenquelle eventuell ergänzt durch eine Infrarotquelle, um Gase zu befördern, zu komprimieren, zu erwärmen und zu beschleunigen.

10. Vorrichtung nach einem der Ansprüche 6 bis 9, **dadurch gekennzeichnet, dass** sie Vorrichtungen für induzierte oder nicht induzierte elektrische Ströme, optische Vorrichtungen, Mikrowelleneinrichtungen zum Erzeugen von Gasplasmen und/oder Plasmonen von gemischten Gasen/Partikeln umfasst.

11. Vorrichtung nach einem der Ansprüche 6 bis 10, **dadurch gekennzeichnet, dass** sie mindestens ein Magnetron und mindestens einen Wellenleiter zum Erzeugen von Mikrowellen mit einer Frequenz zwischen 1 Gigahertz und 300 Gigahertz und zum Leiten dieser Mikrowellen umfasst.
